# EUROPEAN PATENT APPLICATION

(11) **EP 4 383 922 A1**
(43) Date of publication of application: **12.06.2024**
(21) Application number: 22869181.2
(22) Date of filing: 13.09.2022
(51) Int. Cl.: H04W 74/08, G06N 3/02

(54) **COMMUNICATION METHOD AND RELATED APPARATUS**

(30) Priority: 15.09.2021 CN 202111081765
(71) Applicant: Huawei Technologies Co., Ltd., Shenzhen, Guangdong 518129 (CN)
(72) Inventor: LIU, Peng, Shenzhen, Guangdong 518129 (CN); GUO, Ziyang, Shenzhen, Guangdong 518129 (CN); YANG, Xun, Shenzhen, Guangdong 518129 (CN); LUO, Jiajun, Shenzhen, Guangdong 518129 (CN); ZHENG, Bowen, Shenzhen, Guangdong 518129 (CN)
(74) Representative: Thun, Clemens
(86) International application number: PCT/CN2022/118355
(87) International publication number: WO 2023/040812

(57) **Abstract**

Embodiments of this application disclose a communication method and a related apparatus. The method in embodiments of this application includes: receiving, by a first device, first indication information from a second device, where the first indication information indicates the first device to enable or disable an intelligent channel access function, and the intelligent channel access function is a function of accessing a channel based on a channel access decision output by a neural network; and enabling or disabling, by the first device, the intelligent channel access function based on the first indication information. It can be learned that the first device may enable or disable the intelligent channel access function based on the first indication information, to enrich channel access functions supported by the first device. The intelligent channel access function is a function of accessing a channel based on the signal access decision output by the neural network. The first device can access a channel based on the channel access decision output by the neural network. This helps avoid a communication collision between the first device and another device, to improve communication quality of the first device.

## Description

This application claims priority to Chinese Patent Application No. 202111081765.9, filed with the China National Intellectual Property Administration on September 15, 2021 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In a wireless network such as a short-distance transmission network system and a wireless fidelity (wireless fidelity, Wi-Fi) system, a channel is shared, in other words, a plurality of nodes in the wireless network use a same shared channel to perform communication transmission. If two or more nodes simultaneously send packets, a communication collision occurs, resulting in a node transmission failure. Consequently, a throughput of the channel is affected, and a communication delay of the nodes is increased. This greatly affects user experience. Therefore, a channel access decision of the node plays an important role in communication.

Currently, in the Wi-Fi system, a carrier sense multiple access with collision avoidance (carrier sense multiple access with collision avoidance, CSMA/CA) mechanism is used to share a channel to avoid a communication collision. In the CSMA/CAmechanism, a node senses a channel for a period of time. If the channel is always idle in the period of time, the node accesses the channel.

It may be learned that the node in the Wi-Fi system supports a channel access function based on the CSMA/CA mechanism. The node supports a single channel access function. In this case, a communication collision is likely to occur between nodes in the Wi-Fi system, resulting in poor communication quality. For example, when there is a heterogeneous system, a hidden terminal, and the like in an environment, a device in the heterogeneous system or the hidden terminal may use another channel contention mechanism, and a communication collision occurs between the node in the Wi-Fi system and each of the device in the heterogeneous system and the

### SUMMARY

Embodiments of this application provide a communication method and a related apparatus, so that a first device enables or disables an intelligent channel access function based on first indication information, to enrich channel access functions supported by the first device. The intelligent channel access function is a function of accessing a channel based on a signal access decision output by a neural network. The first device may access a channel based on the channel access decision output by the neural network. This helps avoid a communication collision between the first device and another device, to improve communication quality of the first device.

According to a first aspect of this application, a communication method is provided. The method is performed by a first device, or the method is performed by some components (for example, a processor, a chip, or a chip system) in a first device. The method includes:

The first device receives first indication information from a second device, where the first indication information indicates the first device to enable or disable an intelligent channel access function, and the intelligent channel access function is a function of accessing a channel based on a channel access decision output by a neural network; and the first device enables or disables the intelligent channel access function based on the first indication information.

It may be learned from the foregoing technical solution that the first device may enable or disable the intelligent channel access function with reference to the first indication information, to enrich channel access functions supported by the first device. The intelligent channel access function is a function of accessing a channel based on the channel access decision output by the neural network. The first device may access a channel based on the channel access decision output by the neural network. This helps avoid a communication collision between the first device and another device, to improve communication quality of the first device.

In a possible implementation, if the first device enables the intelligent channel access function, the method further includes:

The first device disables a CSMA/CA channel access function of the first device, or the first device keeps enabling a CSMA/CA channel access function of the first device, where the CSMA/CA channel access function is a function of accessing a channel based on a CSMA/CA mechanism.

In this possible implementation, if the first device enables the intelligent channel access function, and keeps enabling the CSMA/CA channel access function, the first device may have an intelligent channel access manner and a CSMA/CA channel access manner for selection. Therefore, it is convenient for the first device to select an appropriate channel access manner based on an actual environment situation. This helps improve communication quality of the first device. If the first device enables the intelligent channel access function, and disables the CSMA/CA channel access function, the first device accesses a channel in the intelligent channel access manner. That is, the first device may access a channel based on the channel access decision output by the neural network. This helps avoid a communication collision between the first device and another device, to improve communication quality of the first device.

In another possible implementation, if the first device disables the intelligent channel access function, the method further includes:

The first device enables a CSMA/CA channel access function of the first device, where the CSMA/CA channel access function is a function of accessing a channel based on a CSMA/CA mechanism.

In this possible implementation, if the first device disables the intelligent channel access function, the first device may enable the CSMA/CA channel access function of the first device. Therefore, it is convenient for the first device to access a channel in a CSMA/CA channel access manner.

In another possible implementation, the method further includes:

If the first indication information indicates the first device to enable the intelligent channel access function, the first device sends second indication information to a third device, where the second indication information indicates the third device to enable the intelligent channel access function; or
if the first indication information indicates the first device to disable the intelligent channel access function, the first device sends third indication information to a third device, where the third indication information indicates the third device to disable the intelligent channel access function.

In this possible implementation, the first device may further indicate, with reference to the first indication information, the third device to enable or disable the intelligent channel access function, so that the third device enables or disables the intelligent channel access function. For example, the first device may be an access point station (access point, AP), the third device is a non-access point station (None Access Point Station, Non-AP STA), and the AP indicates the STA to enable or disable the intelligent channel access function.

In another possible implementation, if the first device enables the intelligent channel access function, and keeps enabling the CSMA/CA channel access function, the method further includes:

The first device determines a first channel access manner based on a network status parameter, where the first channel access manner is an intelligent channel access manner or a CSMA/CA channel access manner, the intelligent channel access manner is a channel access manner provided by the intelligent channel access function of the first device, the CSMA/CA channel access manner is a channel access manner provided by the CSMA/CA channel access function of the first device, and the CSMA/CA channel access function is the function of accessing a channel based on the CSMA/CA mechanism; and the first device sends data on a channel in the first channel access manner.

In this possible implementation, the first device may select a corresponding channel access manner based on network status information, and send the data in the selected channel access manner. The channel access manner may be the CSMA/CA channel access manner or the intelligent channel access manner. The intelligent channel access manner is a manner of accessing a channel based on the channel access decision obtained by the neural network. This helps avoid a communication collision between the first device and another node, to implement interference avoidance, improve communication quality of the node, and improve user experience.

In another possible implementation, the intelligent channel access manner is a manner of accessing a channel based on a channel access decision obtained by the neural network based on an environment status parameter.

It may be learned that the intelligent channel access manner is a manner of accessing a channel based on the channel access decision obtained by the neural network based on the environment status parameter. The first device may send the data based on the channel access decision output by the neural network. This helps avoid a communication collision between the first device and another node, to implement interference avoidance, and improve communication quality.

In another possible implementation, the environment status parameter includes at least one of the following:
a received signal strength indicator (received signal strength indicator, RSSI) obtained by the first device, an energy detection value obtained by performing signal energy detection by the first device, and a carrier sense value obtained by performing carrier sense by the first device.

Some possible implementations of the environment status parameter are shown in this implementation, to facilitate execution of the solution. The neural network in the first device may output the channel access decision based on one or more of the environment status parameters shown above. The first device may send the data based on the channel access decision output by the neural network. This helps avoid a communication collision between the first device and another node, to implement interference avoidance, and improve communication quality.

In another possible implementation, that the first device determines a first channel access manner based on a network status parameter includes:

The first device determines a quantity M of times that an energy detection value is greater than a first threshold in a plurality of times of signal energy detection performed by the first device in first preset duration and a quantity N of times that a value is greater than a second threshold in a plurality of times of carrier sense performed by the first device in the first preset duration, where both M and N are integers greater than or equal to 1; and
if a ratio of M to N is greater than or equal to a third threshold, the first device determines that the first channel access manner is the CSMA/CA channel access manner; or
if a ratio of M to N is less than a third threshold, the first device determines that the first channel access manner is the intelligent channel access manner.

A specific determining manner in which the first device determines the first channel access manner based on the network status parameter is provided above. The first device may select a corresponding channel access manner based on a network interference degree (represented by using the energy detection value and the carrier sense value). For example, when the network interference degree is high, the first device may select the intelligent channel access manner, to facilitate interference avoidance, so as to avoid a communication collision between the first device and another node, and improve communication transmission performance. When the network interference degree is low, the first device may select the CSMA/CA channel access manner.

In another possible implementation, that the first device determines a first channel access manner based on network status information includes:

If there is a hidden terminal in a basic service set (basic service set, BSS) in which the first device is located, the first device determines that the first channel access manner is the intelligent channel access manner; or
if there is no hidden terminal in a BSS in which the first device is located, the first device determines that the first channel access manner is the CSMA/CA channel access manner.

Another specific determining manner in which the first device determines the first channel access manner based on the network status parameter is provided above. The first device may select a corresponding channel access manner based on a network topology structure. For example, when there is no hidden terminal in the BSS in which the first device is located, the first device selects the CSMA/CA channel access manner, to avoid a communication collision between the first device and the hidden terminal.

In another possible implementation, that the first device determines a first channel access manner based on network status information includes:

The first device determines total duration that is in second preset duration and in which a data packet is transmitted on the channel; and
if the total duration is greater than or equal to a fourth threshold, the first device determines that the first channel access manner is the intelligent channel access manner; or
if the total duration is less than a fourth threshold, the first device determines that the first channel access manner is the CSMA/CA channel access manner.

Another specific determining manner in which the first device determines the first channel access manner based on the network status parameter is provided above. The first device may select a corresponding channel access manner based on a busyness degree of the channel. For example, when the channel is busy, the first device selects the intelligent channel access manner, to avoid a communication collision with another node on the channel.

In another possible implementation, the first channel access manner is the intelligent channel access manner, and that the first device sends data on a channel in the first channel access manner includes:

The first device maps the data to an intelligent channel access queue, where the intelligent channel access queue carries data that accesses a channel in the intelligent channel access manner; and
the first device sends the data on the channel by using a queue parameter that is of the intelligent channel access queue and that is output by the neural network.

It may be learned that a solution in which the first device sends the data on the channel in the intelligent channel access manner is provided. The first device may map the data to the intelligent channel access queue, and send the data on the channel by using the queue parameter that is of the intelligent channel access queue and that is output by the neural network, to avoid a communication collision with another node on the channel.

In another possible implementation, the queue parameter of the intelligent channel access queue includes a sending probability of the data or sixth indication information, and the sixth indication information indicates whether to send the data.

Two possible implementations of the queue parameter of the intelligent channel access queue are provided in this implementation, to facilitate execution of the solution. The first device may send the data on the channel by using the sending probability or a first indication output by the neural network, to avoid a communication collision with another node on the channel.

According to a second aspect of this application, a communication method is provided. The method is applied to a second device. The second device includes a display screen, the display screen is configured to display a user interface, the user interface includes a first control, and the first control is used to enable an intelligent channel access function or disable the intelligent channel access function. The intelligent channel access function is a function of accessing a channel based on a channel access decision output by a neural network. The method includes:

The second device detects a first operation performed on the first control, and generates a first instruction; and
the second device sends first indication information to a first device in response to the first instruction, where the first indication information indicates the first device to enable or disable the intelligent channel access function.

In the foregoing technical solution, the second device may generate the first instruction for the first operation performed on the first control, and indicate, based on the first instruction, the first device to enable or disable the intelligent channel access function. Therefore, the first device is flexibly controlled to enable or disable the intelligent channel access function. This enriches channel access functions supported by the first device. The intelligent channel access function is a function of accessing a channel based on the channel access decision output by the neural network. The first device can access a channel based on the channel access decision output by the neural network. This helps avoid a communication collision between the first device and another device, to improve communication quality of the first device.

In a possible implementation, the first operation is tapping the first control to set the first control to an enabled (Enabled) state; and
that the second device sends first indication information to a first device in response to the first instruction includes:
the second device sends the first indication information to the first device in response to the first instruction, where the first indication information indicates to enable the intelligent channel access function.

In this possible implementation, a specific form of the first operation is shown, and the first control is set to the enabled (Enabled) state by using a tap operation performed by a user, so that the second device indicates the first device to enable the intelligent channel access function. In this way, the first device is flexibly indicated to enable or disable the intelligent channel access function.

In another possible implementation, the first operation is tapping the first control to set the first control to a disabled (Disabled) state; and
that the second device sends first indication information to a first device in response to the first instruction includes:
the second device sends the first indication information to the first device in response to the first instruction, where the first indication information indicates to disable the intelligent channel access function.

In this possible implementation, a specific example of the first operation is shown, and the first control is set to the disabled (Disabled) state by using a tap operation performed by a user, so that the second device indicates the first device to disable the intelligent channel access function. In this way, the first device is flexibly indicated to enable or disable the intelligent channel access function.

In another possible implementation, the first operation is tapping the first control to set the first control to a checked state; and
that the second device sends first indication information to a first device in response to the first instruction includes:
the second device sends the first indication information to the first device in response to the first instruction, where the first indication information indicates to enable the intelligent channel access function.

In this possible implementation, a specific example of the first operation is shown, and the first control is set to the checked state by using a tap operation performed by a user, so that the second device indicates the first device to enable the intelligent channel access function. In this way, the first device is flexibly indicated to enable or disable the intelligent channel access function.

In another possible implementation, the display screen is a trigger screen, and the first operation is tapping the first control to set the first control to an on state; and
that the second device sends first indication information to a first device in response to the first instruction includes:
the second device sends the first indication information to the first device in response to the first instruction, where the first indication information indicates to enable the intelligent channel access function.

In this possible implementation, a specific example of the first operation is shown, and the first control is set to the on state by using a tap operation performed by a user, so that the second device indicates the first device to enable the intelligent channel access function. In this way, the first device is flexibly indicated to enable or disable the intelligent channel access function.

According to a third aspect of this application, a communication method is provided. The method is performed by a STA, or the method is performed by some components (for example, a processor, a chip, or a chip system) in a STA. The method includes:

A third device receives second indication information from a first device, where the second indication information indicates the third device to enable an intelligent channel access function; and the third device enables the intelligent channel access function based on the second indication information, where the intelligent channel access function is a function of accessing a channel based on a signal access decision output by a neural network.

Alternatively, a third device receives third indication information from a first device, where the third indication information indicates the third device to disable an intelligent channel access function; and the third device disables the intelligent channel access function based on the third indication information, where the intelligent channel access function is a function of accessing a channel based on a signal access decision output by a neural network.

In the foregoing technical solution, the first device may further indicate the third device to enable or disable the intelligent channel access function, so that the third device enables or disables the intelligent channel access function. For example, the first device may be an AP, the third device is a STA, and the AP indicates the STA to enable or disable the intelligent channel access function. Therefore, the first device flexibly indicates the third device to enable or disable the intelligent channel access function. The intelligent channel access function is a function of accessing a channel based on the signal access decision output by the neural network. The third device may access a channel based on the channel access decision output by the neural network. This helps avoid a communication collision between the third device and another device, to improve communication quality of the third device.

In a possible implementation, if the third device enables the intelligent channel access function, the method further includes:

The third device disables a CSMA/CA channel access function of the third device, or the third device keeps enabling a CSMA/CA channel access function of the third device, where the CSMA/CA channel access function is a function of accessing a channel based on a CSMA/CA mechanism.

In this possible implementation, if the third device enables the intelligent channel access function, and keeps enabling the CSMA/CA channel access function, the third device may have an intelligent channel access manner and a CSMA/CA channel access manner for selection. Therefore, it is convenient for the third device to select an appropriate channel access manner based on an actual environment situation. This helps improve communication quality of the third device. If the third device enables the intelligent channel access function, and disables the CSMA/CA channel access function, the third device accesses a channel in the intelligent channel access manner. That is, the third device may access a channel based on the channel access decision output by the neural network. This helps avoid a communication collision between the third device and another device, to improve communication quality of the third device.

In another possible implementation, if the third device disables the intelligent channel access function, the method further includes:

The third device enables a CSMA/CA channel access function of the third device, where the CSMA/CA channel access function is a function of accessing a channel based on a CSMA/CA mechanism.

In this possible implementation, if the third device disables the intelligent channel access function, the third device may enable the CSMA/CA channel access function of the first device. Therefore, it is convenient for the third device to access a channel in a CSMA/CA channel access manner.

According to a fourth aspect of this application, a communication method is provided. The method is performed by a first device, or the method is performed by some components (for example, a processor, a chip, or a chip system) in a first device. The method is applied to the first device. The first device includes a display screen, the display screen is configured to display a user interface, the user interface includes a first control, and the first control is used to enable or disable an intelligent channel access function. The intelligent channel access function is a function of accessing a channel based on a channel access decision output by a neural network. The method includes:

The first device detects a first operation performed on the first control, and generates a second instruction; and
the first device enables or disables the intelligent channel access function of the first device in response to the second instruction.

In the foregoing technical solution, the first device may generate the first instruction for the first operation performed on the first control, and enable or disable the intelligent channel access function based on the first instruction. Therefore, the first device flexibly enables or disables the intelligent channel access function. This enriches channel access functions supported by the first device. The intelligent channel access function is a function of accessing a channel based on the channel access decision output by the neural network. The first device can access a channel based on the channel access decision output by the neural network. This helps avoid a communication collision between the first device and another device, to improve communication quality of the first device.

In a possible implementation, the first operation is tapping the first control to set the first control to an enabled (Enabled) state; and that the first device enables or disables the intelligent channel access function of the first device in response to the second instruction includes:
the first device enables the intelligent channel access function of the first device in response to the second instruction.

In this possible implementation, a specific form of the first operation is shown, and the first control is set to the enabled (Enabled) state by using a tap operation performed by a user, so that the first device enables the intelligent channel access function. In this way, the user flexibly controls the first device to enable or disable the intelligent channel access function.

In another possible implementation, the first operation is tapping the first control to set the first control to a disabled (Disabled) state; and
that the first device enables or disables the intelligent channel access function of the first device in response to the second instruction includes:
the first device disables the intelligent channel access function of the first device in response to the second instruction.

In this possible implementation, a specific form of the first operation is shown, and the first control is set to the disabled (Disabled) state by using a tap operation performed by a user, so that the first device disables the intelligent channel access function. In this way, the user flexibly controls the first device to enable or disable the intelligent channel access function.

In another possible implementation, the first operation is tapping the first control to set the first control to a checked state; and that the first device enables or disables the intelligent channel access function of the first device in response to the second instruction includes:
the first device enables the intelligent channel access function of the first device in response to the second instruction.

In this possible implementation, a specific form of the first operation is shown, and the first control is set to the checked state by using a tap operation performed by a user, so that the first device enables the intelligent channel access function. In this way, the user flexibly controls the first device to enable or disable the intelligent channel access function.

In another possible implementation, the display screen is a trigger screen, and the first operation is tapping the first control to set the first control to an on state; and that the first device enables or disables the intelligent channel access function of the first device in response to the second instruction includes:
the first device enables the intelligent channel access function of the first device in response to the second instruction.

In this possible implementation, a specific form of the first operation is shown, and the first control is set to the on state by using a tap operation performed by a user, so that the first device enables the intelligent channel access function. In this way, the user flexibly controls the first device to enable or disable the intelligent channel access function.

In another possible implementation, if the first device enables the intelligent channel access function, the method further includes:

The first device disables a CSMA/CA channel access function of the first device, or the first device keeps enabling a CSMA/CA channel access function of the first device, where the CSMA/CA channel access function is a function of accessing a channel based on a CSMA/CA mechanism.

In this possible implementation, if the first device enables the intelligent channel access function, and keeps enabling the CSMA/CA channel access function, the first device may have an intelligent channel access manner and a CSMA/CA channel access manner for selection. Therefore, it is convenient for the first device to select an appropriate channel access manner based on an actual environment situation. This helps improve communication quality of the first device. If the first device enables the intelligent channel access function, and disables the CSMA/CA channel access function, the first device accesses a channel in the intelligent channel access manner. That is, the first device may access a channel based on the channel access decision output by the neural network. This helps avoid a communication collision between the first device and another device, to improve communication quality of the first device.

In another possible implementation, if the first device disables the intelligent channel access function, the method further includes:

The first device enables a CSMA/CA channel access function of the first device, where the CSMA/CA channel access function is a function of accessing a channel based on a CSMA/CA mechanism.

In this possible implementation, if the first device disables the intelligent channel access function, the first device may enable the CSMA/CA channel access function of the first device. Therefore, it is convenient for the first device to access a channel in a CSMA/CA channel access manner.

In another possible implementation, if the first device enables the intelligent channel access function, and keeps enabling the CSMA/CA channel access function, the method further includes:

The first device determines a first channel access manner based on a network status parameter, where the first channel access manner is an intelligent channel access manner or a CSMA/CA channel access manner, the intelligent channel access manner is a channel access manner provided by the intelligent channel access function of the first device, the CSMA/CA channel access manner is a channel access manner provided by the CSMA/CA channel access function of the first device, and the CSMA/CA channel access function is the function of accessing a channel based on the CSMA/CA mechanism; and the first device sends data on a channel in the first channel access manner.

In this possible implementation, the first device may select a corresponding channel access manner based on network status information, and send the data in the selected channel access manner. The channel access manner may be the CSMA/CA channel access manner or the intelligent channel access manner. The intelligent channel access manner is a manner of accessing a channel based on the channel access decision obtained by the neural network. This helps avoid a communication collision between the first device and another node, to implement interference avoidance, improve communication quality of the node, and improve user experience.

In another possible implementation, the intelligent channel access manner is a manner of accessing a channel based on a channel access decision obtained by the neural network based on an environment status parameter.

It may be learned that the intelligent channel access manner is a manner of accessing a channel based on the channel access decision obtained by the neural network based on the environment status parameter. The first device may send the data based on the channel access decision output by the neural network. This helps avoid a communication collision between the first device and another node, to implement interference avoidance, and improve communication quality.

In another possible implementation, the environment status parameter includes at least one of the following:
an RSSI obtained by the first device, an energy detection value obtained by performing signal energy detection by the first device, and a carrier sense value obtained by performing carrier sense by the first device.

Some possible implementations of the environment status parameter are shown in this implementation, to facilitate execution of the solution. The neural network in the first device may output the channel access decision based on one or more of the environment status parameters shown above. The first device may send the data based on the channel access decision output by the neural network. This helps avoid a communication collision between the first device and another node, to implement interference avoidance, and improve communication quality.

In another possible implementation, that the first device determines a first channel access manner based on a network status parameter includes:

The first device determines a quantity M of times that an energy detection value is greater than a first threshold in a plurality of times of signal energy detection performed by the first device in first preset duration and a quantity N of times that a value is greater than a second threshold in a plurality of times of carrier sense performed by the first device in the first preset duration, where both M and N are integers greater than or equal to 1; and
if a ratio of M to N is greater than or equal to a third threshold, the first device determines that the first channel access manner is the CSMA/CA channel access manner; or
if a ratio of M to N is less than a third threshold, the first device determines that the first channel access manner is the intelligent channel access manner.

A specific determining manner in which the first device determines the first channel access manner based on the network status parameter is provided above. The first device may select a corresponding channel access manner based on a network interference degree (represented by using the energy detection value and the carrier sense value). For example, when the network interference degree is high, the first device may select the intelligent channel access manner, to facilitate interference avoidance, so as to avoid a communication collision between the first device and another node, and improve communication transmission performance. When the network interference degree is low, the first device may select the CSMA/CA channel access manner.

In another possible implementation, that the first device determines a first channel access manner based on network status information includes:

If there is a hidden terminal in a BSS in which the first device is located, the first device determines that the first channel access manner is the intelligent channel access manner; or
if there is no hidden terminal in a BSS in which the first device is located, the first device determines that the first channel access manner is the CSMA/CA channel access manner.

Another specific determining manner in which the first device determines the first channel access manner based on the network status parameter is provided above. The first device may select a corresponding channel access manner based on a network topology structure. For example, when there is no hidden terminal in the BSS in which the first device is located, the first device selects the CSMA/CA channel access manner, to avoid a communication collision between the first device and the hidden terminal.

In another possible implementation, that the first device determines a first channel access manner based on network status information includes:

The first device determines total duration that is in second preset duration and in which a data packet is transmitted on the channel; and
if the total duration is greater than or equal to a fourth threshold, the first device determines that the first channel access manner is the intelligent channel access manner; or
if the total duration is less than a fourth threshold, the first device determines that the first channel access manner is the CSMA/CA channel access manner.

Another specific determining manner in which the first device determines the first channel access manner based on the network status parameter is provided above. The first device may select a corresponding channel access manner based on a busyness degree of the channel. For example, when the channel is busy, the first device selects the intelligent channel access manner, to avoid a communication collision with another node on the channel.

In another possible implementation, the first channel access manner is the intelligent channel access manner, and that the first device sends data on the channel in a first channel access manner includes:
The first device maps the data to an intelligent channel access queue, where the intelligent channel access queue carries data that accesses a channel in the intelligent channel access manner; and
the first device sends the data on the channel by using a queue parameter that is of the intelligent channel access queue and that is output by the neural network.

It may be learned that a solution in which the first device sends the data on the channel in the intelligent channel access manner is provided. The first device may map the data to the intelligent channel access queue, and send the data on the channel by using the queue parameter that is of the intelligent channel access queue and that is output by the neural network, to avoid a communication collision with another node on the channel.

In another possible implementation, the queue parameter of the intelligent channel access queue includes a sending probability of the data or sixth indication information, and the sixth indication information indicates whether to send the data.

Two possible implementations of the queue parameter of the intelligent channel access queue are provided in this implementation, to facilitate execution of the solution. The first device may send the data on the channel by using the sending probability or a first indication output by the neural network, to avoid a communication collision with another node on the channel.

According to a fifth aspect of this application, a communication apparatus is provided, and includes a processing unit and a transceiver unit.

The transceiver unit is configured to receive first indication information from a second device, where the first indication information indicates the communication apparatus to enable or disable an intelligent channel access function, and the intelligent channel access function is a function of accessing a channel based on a channel access decision output by a neural network.

The processing unit is configured to enable or disable the intelligent channel access function based on the first indication information.

In a possible implementation, if the communication apparatus enables the intelligent channel access function, the processing unit is further configured to:
disable a CSMA/CA channel access function of the communication apparatus, or keep enabling a CSMA/CA channel access function of the communication apparatus, where the CSMA/CA channel access function is a function of accessing a channel based on a CSMA/CA mechanism.

In another possible implementation, if the communication apparatus disables the intelligent channel access function, the processing unit is further configured to:
enable a CSMA/CA channel access function of the communication apparatus, where the CSMA/CA channel access function is a function of accessing a channel based on a CSMA/CA mechanism.

In another possible implementation, the transceiver unit is further configured to:
if the first indication information indicates the communication apparatus to enable the intelligent channel access function, send second indication information to a third device, where the second indication information indicates the third device to enable the intelligent channel access function; or
if the first indication information indicates the communication apparatus to disable the intelligent channel access function, send third indication information to a third device, where the third indication information indicates the third device to disable the intelligent channel access function.

In another possible implementation, if the communication apparatus enables the intelligent channel access function, and keeps enabling the CSMA/CA channel access function, the processing unit is further configured to:
determine a first channel access manner based on a network status parameter, where the first channel access manner is an intelligent channel access manner or a CSMA/CA channel access manner, the intelligent channel access manner is a channel access manner provided by the intelligent channel access function of the communication apparatus, the CSMA/CA channel access manner is a channel access manner provided by the CSMA/CA channel access function of the communication apparatus, and the CSMA/CA channel access function is the function of accessing a channel based on the CSMA/CA mechanism; and
the transceiver unit is further configured to send data on a channel in the first channel access manner.

In another possible implementation, the intelligent channel access manner is a manner of accessing a channel based on a channel access decision obtained by the neural network based on an environment status parameter.

In another possible implementation, the environment status parameter includes at least one of the following:
an RSSI obtained by the communication apparatus, an energy detection value obtained by performing signal energy detection by the communication apparatus, and a carrier sense value obtained by performing carrier sense by the communication apparatus.

In another possible implementation, the processing unit is specifically configured to:
determine a quantity M of times that an energy detection value is greater than a first threshold in a plurality of times of signal energy detection performed by the communication apparatus in first preset duration and a quantity N of times that a value is greater than a second threshold in a plurality of times of carrier sense performed by the communication apparatus in the first preset duration, where both M and N are integers greater than or equal to 1; and
if a ratio of M to N is greater than or equal to a third threshold, determine that the first channel access manner is the CSMA/CA channel access manner; or
if a ratio of M to N is less than a third threshold, determine that the first channel access manner is the intelligent channel access manner.

In another possible implementation, the processing unit is specifically configured to:
if there is a hidden terminal in a BSS in which the communication apparatus is located, determine that the first channel access manner is the intelligent channel access manner; or
if there is no hidden terminal in a BSS in which the communication apparatus is located, determine that the first channel access manner is the CSMA/CA channel access manner.

In another possible implementation, the processing unit is specifically configured to:
determine total duration that is in second preset duration and in which a data packet is transmitted on the channel; and
if the total duration is greater than or equal to a fourth threshold, determine that the first channel access manner is the intelligent channel access manner; or
if the total duration is less than a fourth threshold, determine that the first channel access manner is the CSMA/CA channel access manner.

In another possible implementation, the first channel access manner is the intelligent channel access manner, and the processing unit is specifically configured to:
map the data to an intelligent channel access queue, where the intelligent channel access queue carries data that accesses a channel in the intelligent channel access manner; and
send the data on the channel by using a queue parameter that is of the intelligent channel access queue and that is output by the neural network.

In another possible implementation, the queue parameter of the intelligent channel access queue includes a sending probability of the data or sixth indication information, and the sixth indication information indicates whether to send the data.

According to a sixth aspect of this application, a communication apparatus is provided. The communication apparatus includes a display screen, the display screen is configured to display a user interface, the user interface includes a first control, and the first control is used to enable an intelligent channel access function or disable the intelligent channel access function. The intelligent channel access function is a function of accessing a channel based on a channel access decision output by a neural network. The communication apparatus includes a processing unit and a transceiver unit.

The processing unit is configured to: detect a first operation performed on the first control, and generate a first instruction.

The transceiver unit is configured to send first indication information to a first device in response to the first instruction, where the first indication information indicates the first device to enable or disable the intelligent channel access function.

In a possible implementation, the first operation is tapping the first control to set the first control to an enabled (Enabled) state; and
the transceiver unit is specifically configured to:
send the first indication information to the first device in response to the first instruction, where the first indication information indicates to enable the intelligent channel access function.

In another possible implementation, the first operation is tapping the first control to set the first control to a disabled (Disabled) state; and
the transceiver unit is specifically configured to:
send the first indication information to the first device in response to the first instruction, where the first indication information indicates to disable the intelligent channel access function.

In another possible implementation, the first operation is tapping the first control to set the first control to a checked state; and
the transceiver unit is specifically configured to:
send the first indication information to the first device in response to the first instruction, where the first indication information indicates to enable the intelligent channel access function.

In another possible implementation, the display screen is a trigger screen, and the first operation is tapping the first control to set the first control to an on state; and
the transceiver unit is specifically configured to:
send the first indication information to the first device in response to the first instruction, where the first indication information indicates to enable the intelligent channel access function.

According to a seventh aspect of this application, a communication apparatus is provided. The communication apparatus includes a processing unit and a transceiver unit.

The transceiver unit is configured to receive second indication information from a first device, where the second indication information indicates the communication apparatus to enable an intelligent channel access function; and the processing unit is configured to enable the intelligent channel access function based on the second indication information, where the intelligent channel access function is a function of accessing a channel based on a signal access decision output by a neural network.

Alternatively, the transceiver unit is configured to receive third indication information from a first device, where the third indication information indicates the communication apparatus to disable an intelligent channel access function; and the processing unit is configured to disable the intelligent channel access function based on the third indication information, where the intelligent channel access function is a function of accessing a channel based on a signal access decision output by a neural network.

In a possible implementation, if the communication apparatus enables the intelligent channel access function, the processing unit is further configured to:
disable a CSMA/CA channel access function of the communication apparatus, or keep enabling a CSMA/CA channel access function of the communication apparatus, where the CSMA/CA channel access function is a function of accessing a channel based on a CSMA/CA mechanism.

In another possible implementation, if the communication apparatus disables the intelligent channel access function, the processing unit is further configured to:
enable a CSMA/CA channel access function of the communication apparatus, where the CSMA/CA channel access function is a function of accessing a channel based on a CSMA/CA mechanism.

According to an eighth aspect of this application, a communication apparatus is provided. The communication apparatus includes a display screen, the display screen is configured to display a user interface, the user interface includes a first control, and the first control is used to enable or disable an intelligent channel access function. The intelligent channel access function is a function of accessing a channel based on a channel access decision output by a neural network. The communication apparatus includes a processing unit.

The processing unit is configured to: detect a first operation performed on the first control, and generate a second instruction; and enable or disable the intelligent channel access function of the communication apparatus in response to the second instruction.

In a possible implementation, the first operation is tapping the first control to set the first control to an enabled (Enabled) state; and the processing unit is specifically configured to:
enable the intelligent channel access function of the communication apparatus in response to the second instruction.

In another possible implementation, the first operation is tapping the first control to set the first control to a disabled (Disabled) state; and
the processing unit is specifically configured to:
disable the intelligent channel access function of the communication apparatus in response to the second instruction.

In another possible implementation, the first operation is tapping the first control to set the first control to a checked state; and the processing unit is specifically configured to:
enable the intelligent channel access function of the communication apparatus in response to the second instruction.

In another possible implementation, the display screen is a trigger screen, and the first operation is tapping the first control to set the first control to an on state; and the processing unit is specifically configured to:
enable the intelligent channel access function of the communication apparatus in response to the second instruction.

In another possible implementation, if the communication apparatus enables the intelligent channel access function, the processing unit is further configured to:
disable a CSMA/CA channel access function of the communication apparatus, or keep enabling a CSMA/CA channel access function of the communication apparatus, where the CSMA/CA channel access function is a function of accessing a channel based on a CSMA/CA mechanism.

In another possible implementation, if the communication apparatus disables the intelligent channel access function, the processing unit is further configured to:
enable a CSMA/CA channel access function of the communication apparatus, where the CSMA/CA channel access function is a function of accessing a channel based on a CSMA/CA mechanism.

In another possible implementation, if the communication apparatus enables the intelligent channel access function, and keeps enabling the CSMA/CA channel access function, the processing unit is further configured to:
determine a first channel access manner based on a network status parameter, where the first channel access manner is an intelligent channel access manner or a CSMA/CA channel access manner, the intelligent channel access manner is a channel access manner provided by the intelligent channel access function of the communication apparatus, the CSMA/CA channel access manner is a channel access manner provided by the CSMA/CA channel access function of the communication apparatus, and the CSMA/CA channel access function is the function of accessing a channel based on the CSMA/CA mechanism; and
the communication apparatus further includes a transceiver unit, where
the transceiver unit is configured to send data on a channel in the first channel access manner.

In another possible implementation, the intelligent channel access manner is a manner of accessing a channel based on a channel access decision obtained by the neural network based on an environment status parameter.

In another possible implementation, the environment status parameter includes at least one of the following:
an RSSI obtained by the communication apparatus, an energy detection value obtained by performing signal energy detection by the communication apparatus, and a carrier sense value obtained by performing carrier sense by the communication apparatus.

In another possible implementation, the processing unit is specifically configured to:
determine a quantity M of times that an energy detection value is greater than a first threshold in a plurality of times of signal energy detection performed by the communication apparatus in first preset duration and a quantity N of times that a value is greater than a second threshold in a plurality of times of carrier sense performed by the communication apparatus in the first preset duration, where both M and N are integers greater than or equal to 1; and
if a ratio of M to N is greater than or equal to a third threshold, determine that the first channel access manner is the CSMA/CA channel access manner; or
if a ratio of M to N is less than a third threshold, determine that the first channel access manner is the intelligent channel access manner.

In another possible implementation, the processing unit is specifically configured to:
if there is a hidden terminal in a BSS in which the communication apparatus is located, determine that the first channel access manner is the intelligent channel access manner; or
if there is no hidden terminal in a BSS in which the communication apparatus is located, determine that the first channel access manner is the CSMA/CA channel access manner.

In another possible implementation, the processing unit is specifically configured to:
determine total duration that is in second preset duration and in which a data packet is transmitted on the channel; and
if the total duration is greater than or equal to a fourth threshold, determine that the first channel access manner is the intelligent channel access manner; or
if the total duration is less than a fourth threshold, determine that the first channel access manner is the CSMA/CA channel access manner.

In another possible implementation, the first channel access manner is the intelligent channel access manner, and the processing unit is specifically configured to:
map the data to an intelligent channel access queue, where the intelligent channel access queue carries data that accesses a channel in the intelligent channel access manner; and
send the data on the channel by using a queue parameter that is of the intelligent channel access queue and that is output by the neural network.

In another possible implementation, the queue parameter of the intelligent channel access queue includes a sending probability of the data or sixth indication information, and the sixth indication information indicates whether to send the data.

According to a ninth aspect of embodiments of this application, a communication apparatus is provided, and includes at least one processor. The at least one processor is coupled to a memory.

The memory is configured to store a program or instructions.

The at least one processor is configured to execute the program or the instructions, to enable the apparatus to implement the method in any possible implementation of any one of the first aspect to the fourth aspect, or to enable the apparatus to implement the method in any possible implementation of any one of the first aspect to the fourth aspect.

According to a tenth aspect of embodiments of this application, a computer-readable storage medium that stores one or more computer-executable instructions is provided. When the computer-executable instructions are executed by a processor, the processor performs the method in any possible implementation of any one of the first aspect to the fourth aspect, or the processor performs the method in any possible implementation of any one of the first aspect to the fourth aspect.

According to an eleventh aspect of embodiments of this application, a computer program product (or referred to as a computer program) that stores one or more computers is provided. When the computer program product is executed by a processor, the processor performs the method in any possible implementation of any one of the first aspect to the fourth aspect, or the processor performs the method in any possible implementation of any one of the first aspect to the fourth aspect.

According to a twelfth aspect of embodiments of this application, a chip system is provided. The chip system includes at least one processor, configured to support a communication apparatus in implementing a function in any possible implementation of any one of the first aspect to the fourth aspect, or configured to support a communication apparatus in implementing a function in any possible implementation of any one of the first aspect to the fourth aspect.

In a possible design, the chip system may further include a memory, configured to store program instructions and data that are necessary for the communication apparatus. The chip system may include a chip, or may include a chip and another discrete device. Optionally, the chip system further includes an interface circuit, and the interface circuit provides program instructions and/or data for the at least one processor.

According to a thirteenth aspect of embodiments of this application, a communication system is provided. The communication system includes the communication apparatus according to the fifth aspect and the communication apparatus according to the sixth aspect.

Optionally, the communication system further includes the communication apparatus according to the seventh aspect.

For technical effects brought by any design manner of the fifth aspect to the thirteenth aspect, refer to the technical effects brought by different implementations of the first aspect and the second aspect. Details are not described herein.

It may be learned from the foregoing technical solutions that embodiments of this application have the following advantages:

It may be learned from the foregoing technical solutions that the first device receives the first indication information from the second device. The first indication information indicates the first device to enable or disable the intelligent channel access function. The intelligent channel access function is a function of accessing a channel based on the signal access decision output by the neural network. The first device enables or disables the intelligent channel access function based on the first indication information. It may be learned that the technical solutions of this application provide a new channel access function, and the first device may enable or disable the intelligent channel access function with reference to the first indication information, to enrich channel access functions supported by the first device. The intelligent channel access function is a function of accessing a channel based on the channel access decision output by the neural network. The first device may access a channel based on the channel access decision output by the neural network. This helps avoid a communication collision between the first device and another device, to improve communication quality of the first device.

### BRIEF DESCRIPTION OF DRAWINGS

FIG. 1A is a schematic diagram of a multi-link device according to an embodiment of this application;
FIG. 1B is a schematic diagram of a communication system according to an embodiment of this application;
FIG. 2 is a schematic diagram of an embodiment of a communication method according to an embodiment of this application;
FIG. 3 is a schematic diagram of a first control according to an embodiment of this application;
FIG. 4 is another schematic diagram of a first control according to an embodiment of this application;
FIG. 5 is another schematic diagram of a first control according to an embodiment of this application;
FIG. 6 is a schematic diagram of a media access control (media access control, MAC) architecture of a first device according to an embodiment of this application;
FIG. 7 is a schematic diagram of another embodiment of a communication method according to an embodiment of this application;
FIG. 8 is another schematic diagram of a first control according to an embodiment of this application;
FIG. 9 is a schematic diagram of another embodiment of a communication method according to an embodiment of this application;
FIG. 10 is a schematic effect diagram of a communication method according to an embodiment of this application;
FIG. 11 is another schematic effect diagram of a communication method according to an embodiment of this application;
FIG. 12 is a schematic diagram of another embodiment of a communication method according to an embodiment of this application;
FIG. 13 is a schematic diagram of another embodiment of a communication method according to an embodiment of this application;
FIG. 14 is a schematic diagram of another embodiment of a communication method according to an embodiment of this application;
FIG. 15 is a schematic diagram of a structure of a communication apparatus according to an embodiment of this application;
FIG. 16 is another schematic diagram of a structure of a communication apparatus according to an embodiment of this application; and
FIG. 17 is another schematic diagram of a structure of a communication apparatus according to an embodiment of this application.

### DESCRIPTION OF EMBODIMENTS

Embodiments of this application provide a communication method and a related apparatus, so that a first device enables or disables an intelligent channel access function based on first indication information, to enrich channel access functions supported by the first device. The intelligent channel access function is a function of accessing a channel based on a channel access decision output by a neural network. The first device can access a channel based on the channel access decision output by the neural network. This helps avoid a communication collision between the first device and another device, to improve communication quality of the first device.

The technical solutions of this application may be applied to various wireless communication networks. The wireless communication network may be a wireless local area network (wireless local area network, WLAN) or a cellular network. The WLAN is usually referred to as a wireless Wi-Fi network, and uses the institute of electrical and electronics engineers (Institute of Electrical and Electronics Engineers, IEEE) 802.11 series of standards. A network node that may be included in the WLAN is a station (station, STA), and the station includes an AP and a non-AP STA. In the following, an access point station is referred to as an AP, and a non-access point station is referred to as a STA.

The access point station is also referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device with a Wi-Fi chip. Optionally, the AP may be a device that supports an 802.11ax standard. Further, optionally, the AP may be a device that supports a plurality of WLAN standards such as 802.11be, 802.11ac, 802.11n, 802.11g, 802.11b, and 802.11a, or may be an access point station suitable for a future generation of Wi-Fi standards.

The non-access point station (none access point station, Non-AP STA) may be a wireless communication chip, a wireless sensor, or a wireless communication terminal, for example, a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, and a computer supporting a Wi-Fi communication function. Specifically, the STA may be a terminal device or a network device with a wireless fidelity chip. Optionally, the station may support an 802.11ax standard. Further, optionally, the station supports a plurality of WLAN standards such as 802.11be, 802.11ac, 802.11n, 802.11g, 802.11b, and 802.11a, or may be a non-access point station suitable for a future generation of Wi-Fi standards.

The communication method and apparatus provided in embodiments of this application may be applied to a wireless communication system. The wireless communication system may be a WLAN. The method may be implemented by a communication device or a chip or a processor in a communication device in the wireless communication system. The communication device may be a wireless communication device that supports parallel transmission on a plurality of links, for example, is referred to as a multi-link device (Multi-link device) or a multi-band device (multi-band device). Compared with a device that supports only single-link transmission, the multi-link device has higher transmission efficiency and a higher throughput.

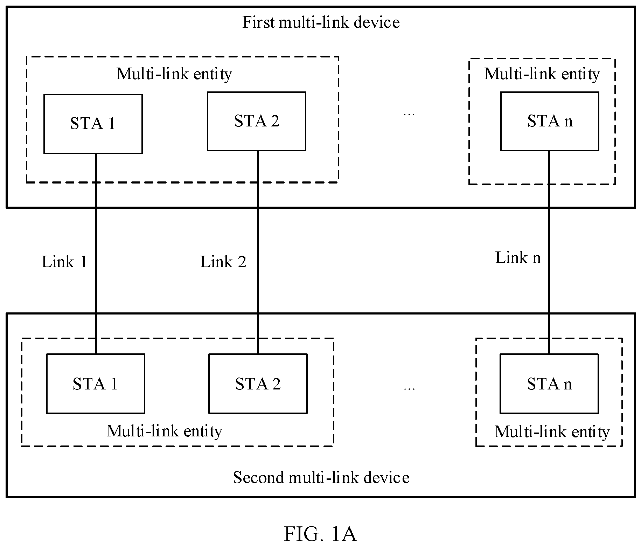

As shown in FIG. 1A, the communication system includes a multi-link device. The multi-link device includes one or more affiliated stations STAs (affiliated STAs). The affiliated STA is a logical station and may work on one link. The affiliated station may be an AP or a non-AP STA. For ease of description, in this application, a multi-link device whose affiliated station is an AP may be referred to as a multi-link AP, a multi-link AP device, or an AP multi-link device (AP multi-link device), and a multi-link device whose affiliated station is a non-AP STA may be referred to as a multi-link STA, a multi-link STA device, or a STA multi-link device (STA multi-link device). For ease of description, "the multi-link device includes an affiliated STA" may also be briefly described as "the multi-link device includes a STA".

The communication system to which the technical solutions of this application are applied includes a first device. The first device may be an AP or a STA.

Optionally, the communication device further includes a second device. For example, the second device may be a cloud server, a cloud management platform, a Wi-Fi management device, a router, a switch, or an access controller. The second device may indicate the first device to enable or disable an intelligent channel access function. For the intelligent channel access function, refer to the following related descriptions.

Optionally, the communication device further includes a third device. For example, the first device is an AP, and the third device is a STA. The first device indicates, based on an indication of the second device, the third device to enable or disable the intelligent channel access function.

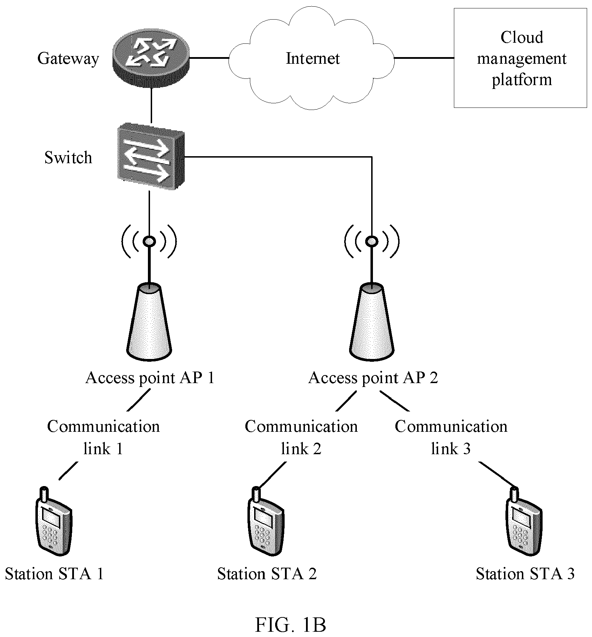

FIG. 1B is a schematic diagram of a communication system according to an embodiment of this application. As shown in FIG. 1B, a communication link 1 is established between an AP 1 and a STA 1, and the AP 1 may provide a communication service for the STA 1. The AP 2 respectively establishes a communication link 2 and a communication link 3 with a STA 2 and a STA 3, and the AP 2 may provide a communication service for the STA 2 and the STA 3. For example, the communication link 1 and the communication link 2 share a channel 1, and the STA 1 and the STA 2 may perform channel contention to access the channel. Alternatively, for example, the communication link 1 and the communication link 3 share a channel 2, and the AP 1 and the STA 3 may perform channel contention to access the channel.

Optionally, the communication system further includes a cloud management platform, and the cloud management platform is connected to a gateway through the internet. The cloud management platform may indicate, through the gateway and a switch, the AP to enable or disable an intelligent channel access function. For the intelligent channel access function, refer to the following related descriptions.

The technical solutions of this application are described below with reference to specific embodiments.

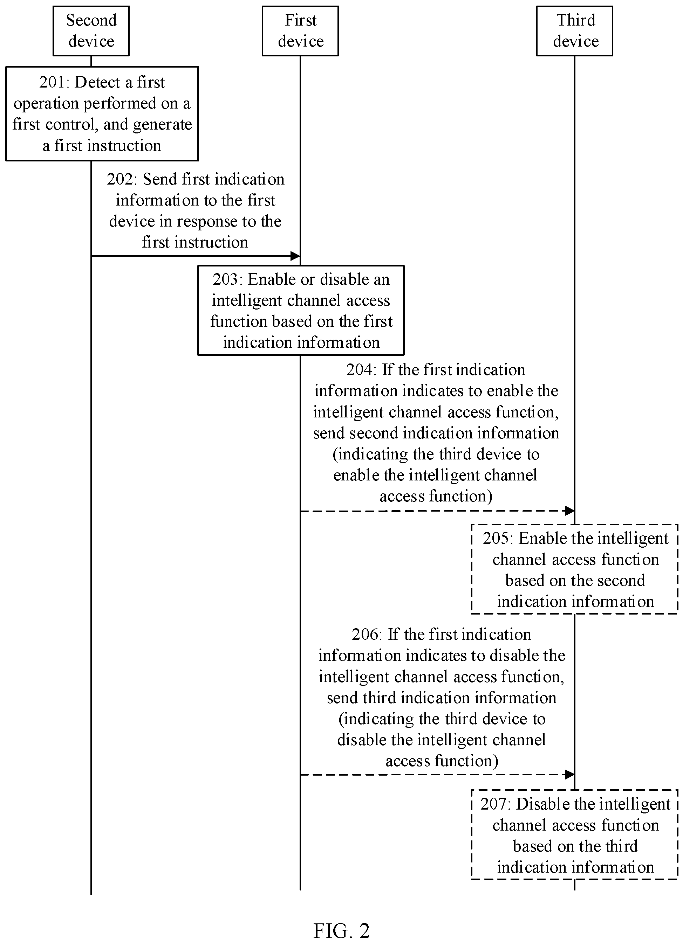

FIG. 2 is a schematic diagram of an embodiment of a communication method according to an embodiment of this application. With reference to FIG. 2, the communication method includes the following steps.

201: A second device detects a first operation performed on a first control, and generates a first instruction.

The second device includes a display screen, the display screen is configured to display a user interface, the user interface includes the first control, and the first control is used to enable an intelligent channel access function or disable the intelligent channel access function. The intelligent channel access function is a function of accessing a channel based on a channel access decision output by a neural network.

Optionally, the intelligent channel access function is a function of accessing a channel based on a channel access decision obtained by the neural network based on an environment status parameter. In some implementations, the environment status parameter includes at least one of the following: an RSSI obtained by detecting a signal by a first device, an energy detection value obtained by performing signal energy detection by the first device, and a carrier sense value obtained by performing carrier sense by the first device.

Specifically, in this application, the first device has a CSMA/CA channel access function and the intelligent channel access function. The CSMA/CA channel access function is a function of enabling the first device to access a channel by using a CSMA/CA mechanism. Correspondingly, it may be understood that a channel access manner provided by the CSMA/CA channel access function may be referred to as a carrier sense multiple access with collision avoidance CSMA/CA channel access manner, and a channel access manner provided by the intelligent channel access function may be referred to as an intelligent channel access manner.

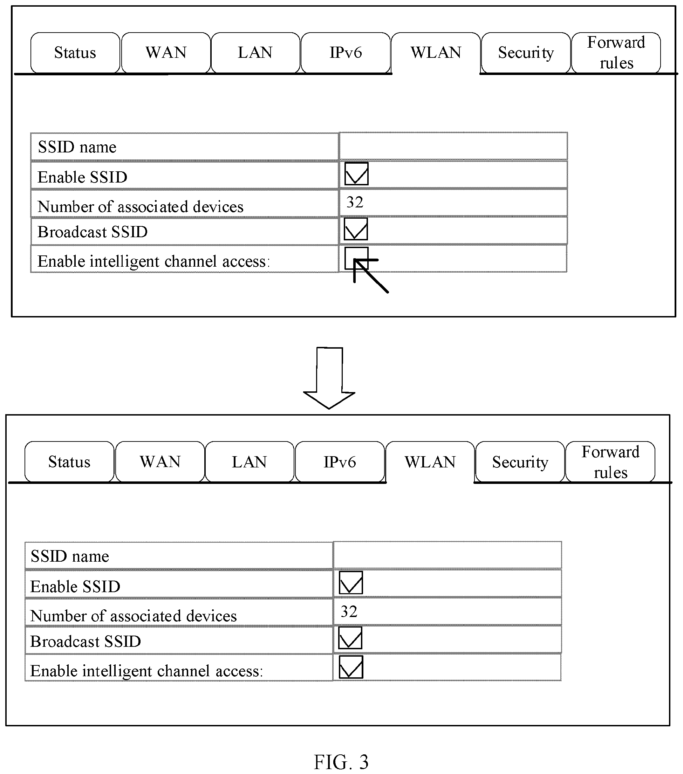

For example, as shown in FIG. 3, the second device is a Wi-Fi management device, a user interface is displayed on a display screen of the Wi-Fi management device, and the first control is "enable intelligent channel access" (Intelligent Channel Access) in the user interface. The control "enable intelligent channel access" is used to enable the intelligent channel access function or disable the intelligent channel access function.

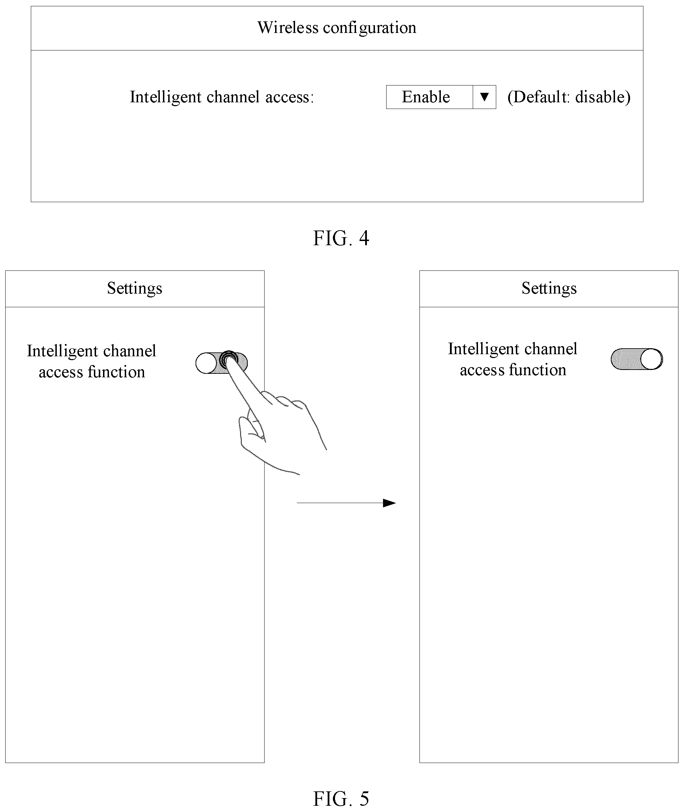

For example, as shown in FIG. 4, a Wi-Fi configuration interface is displayed on the display screen of the second device, and the first control is "intelligent channel access" (Intelligent Channel Access) in the Wi-Fi configuration interface, and is used to enable the intelligent channel access function or disable the intelligent channel access function.

For example, as shown in FIG. 5, the display screen of the second device is a touchscreen, a user interface is displayed on the touchscreen, and the first control is displayed in the user interface. As shown in FIG. 5, the first control is an intelligent channel access function button. The intelligent channel access function button is used to enable the intelligent channel access function or disable the intelligent channel access function.

202: The second device sends first indication information to the first device in response to the first instruction.

The first indication information indicates the first device to enable or disable the intelligent channel access function.

The first indication information is described below with reference to some possible implementations of the first operation. This application is also applicable to another implementation. This is not specifically limited in this application.

Implementation 1: If the first operation is tapping the first control to set the first control to a checked state, the first instruction may be understood as an instruction for enabling the intelligent channel access function, and the first indication information indicates to enable the intelligent channel access function. If the first operation is tapping the first control to set the first control to an unchecked state, the first instruction may be understood as an instruction for disabling the intelligent channel access function, and the first indication information indicates to disable the intelligent channel access function.

For example, as shown in FIG. 3, in the user interface displayed on the display screen of the second device, the first control is "enable intelligent channel access" (Enable Intelligent Channel Access). If a user taps the first control to set the first control to the checked state, the second device generates the instruction for enabling the intelligent channel access function. The second device sends the first indication information to the first device in response to the instruction for enabling the intelligent channel access function, to indicate to enable the intelligent channel access function.

It should be noted that optionally, the first control may be set to the unchecked state by default.

Implementation 2: If the first operation is tapping the first control to set the first control to an enabled (Enabled) state, the first instruction may be understood as an instruction for enabling the intelligent channel access function, and the first indication information indicates to enable the intelligent channel access function. If the first operation is tapping the first control to set the first control to a disabled (Disabled) state, the first instruction may be understood as an instruction for disabling the intelligent channel access function, and the first indication information indicates to disable the intelligent channel access function.

For example, as shown in FIG. 4, a Wi-Fi configuration interface is displayed on the display screen of the second device, the Wi-Fi configuration interface includes the first control, and the first control is "intelligent channel access" in the Wi-Fi configuration interface. If a user taps the first control and sets the first control to the enabled (Enabled) state, the second device generates the instruction for enabling the intelligent channel access function. The second device sends the first indication information to the first device in response to the instruction for enabling the intelligent channel access function, to indicate to enable the intelligent channel access function. If a user taps the first control and sets the first control to the disabled (Disabled) state, the second device generates the instruction for disabling the intelligent channel access function. The second device sends the first indication information to the first device in response to the instruction for disabling the intelligent channel access function, to indicate to disable the intelligent channel access function.

It should be noted that optionally, the first control may be set to the disabled (Disabled) state by default.

Implementation 3: If the first operation is tapping the first control to set the first control to an on state, the first instruction may be understood as an instruction for enabling the intelligent channel access function, and the first indication information indicates to enable the intelligent channel access function. If the first operation is tapping the first control to set the first control to an off state, the first instruction may be understood as an instruction for disabling the intelligent channel access function, and the first indication information indicates to disable the intelligent channel access function.

For example, as shown in FIG. 5, the display screen of the second device is a trigger screen, and the first control used to enable or disable the intelligent channel access function is displayed on the trigger screen. If a user taps the first control and sets the first control to be on, the first instruction may be understood as an instruction for enabling the intelligent channel access function, and the second device sends the first indication information to the first device, to indicate the first device to enable the intelligent channel access function.

It should be noted that optionally, when a network environment is poor or user experience is poor, the user may tap the first control to set the first control to the on state, so that the second device generates the instruction for enabling the intelligent channel access function, and indicates, based on the intelligent channel access function instruction, the first device to enable the intelligent channel access function. The first device may choose to access a channel in the intelligent channel access manner provided by the intelligent channel access function, to improve communication quality of the first device. When a network environment is good or communication quality is good, the user may tap the first control to set the first control to the off state, so that the second device generates the instruction for disabling the intelligent channel access function, and indicates, based on the instruction for disabling the intelligent channel access function, the first device to disable the intelligent channel access function.

In some implementations, a MAC architecture of the first device includes a communication module 1 and a channel access manner mapping module. The communication module 1 is configured to receive the first indication information from the second device. The channel access manner mapping module is used for channel access manner mapping of data and quality of service (quality of service, QoS) mapping of the data.

Optionally, the MAC architecture includes a CSMA/CA queue and an intelligent channel access queue. The CSMA/CA queue carries data that accesses a channel in the CSMA/CA channel access manner. The intelligent channel access queue carries data that accesses a channel in the intelligent channel access manner. The MAC architecture further includes a queue parameter determining module and a virtual collision resolution module. The queue parameter determining module is configured to determine a queue parameter of the intelligent channel access queue. The virtual collision resolution module is configured to determine a final to-be-dequeued queue when data in a plurality of queues is to be simultaneously dequeued. Usually, the virtual collision resolution module may select data in a queue with a higher priority to be dequeued.

In some implementations, the queue parameter determining module includes an environment status parameter obtaining submodule and a neural network submodule. The environment status parameter obtaining submodule is configured to obtain the environment status parameter. The neural network submodule is configured to output the queue parameter of the intelligent channel access queue based on the environment status parameter.

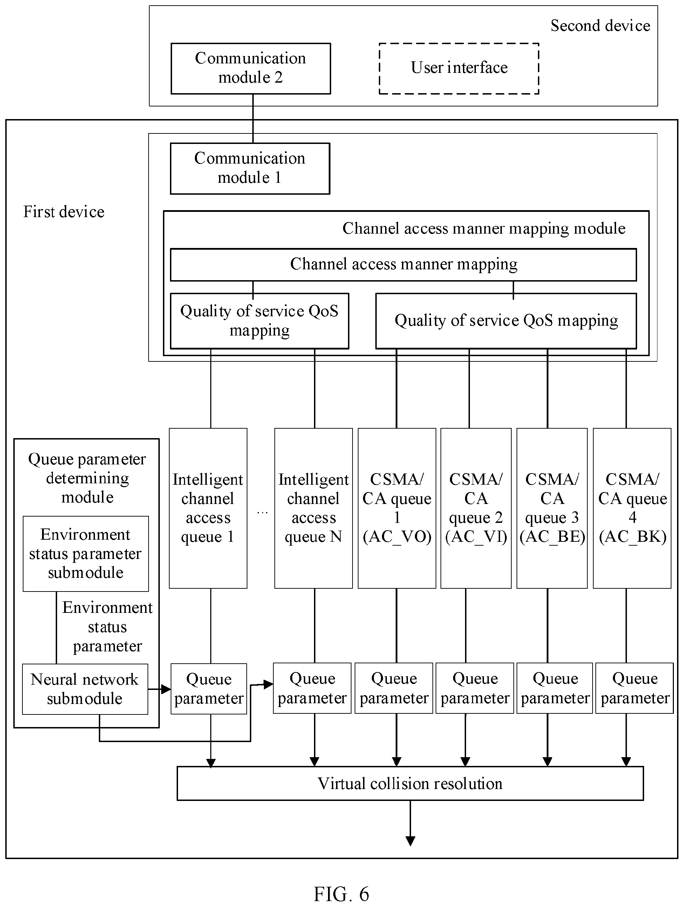

For example, as shown in FIG. 6, the MAC architecture of the first device includes the CSMA/CA queue and the intelligent channel access queue. When both the CSMA/CA queue and the intelligent channel access queue are enabled, the first device determines, through the channel access manner mapping module, to map the data to the CSMA/CA queue or to the intelligent channel access queue. Optionally, there are a plurality of CSMA/CA queues, and different CSMA/CA queues have different priorities. When the first device determines to map the data to the CSMA/CA queue, the first device may map the data to a CSMA/CA queue with a corresponding priority based on a QoS indication. When the first device determines to map the data to the intelligent channel access queue, the first device may map the data to an intelligent channel access queue with a corresponding priority based on a QoS indication. When data in a plurality of queues is to be simultaneously dequeued, the virtual collision resolution module determines that only one queue is finally to be dequeued. Usually, the virtual collision resolution module may select a queue with a higher priority.

Specifically, as shown in FIG. 6, the second device displays the user interface on the display screen by invoking a user interface of a corresponding module. Then, the second device detects the first operation performed on the first control in the user interface, and generates the first instruction. The second device sends the first indication information to the communication module 1 in the first device through a communication module 2 in the second device in response to the first instruction.

203: The first device enables or disables the intelligent channel access function based on the first indication information.

If the first indication information indicates to enable the intelligent channel access function, the first device enables the intelligent channel access function. If the first indication information indicates to disable the intelligent channel access function, the first device disables the intelligent channel access function.

For example, as shown in FIG. 6, if the first indication information indicates to enable the intelligent channel access function, the first device may enable the intelligent channel access queue. That is, the first device may access a channel in the intelligent channel access manner. If the first indication information indicates to disable the intelligent channel access function, the first device may disable the intelligent channel access queue. That is, the first device cannot access a channel in the intelligent channel access manner.

In some implementations, if the first indication information indicates to enable the intelligent channel access function, the first device may disable the CSMA/CA channel access function; or if the first indication information indicates to enable the intelligent channel access function, the first device keeps enabling the CSMA/CA channel access function.

For example, as shown in FIG. 6, the MAC architecture of the first device includes the CSMA/CA queue and the intelligent channel access queue. The first device may enable the intelligent channel access queue, and disable the CSMA/CA queue. That is, the channel access manner mapping module cannot map the data to the CSMA/CA queue, and can map the data only to the intelligent channel access queue. That is, the first device can access a channel only in the intelligent channel access manner. Alternatively, the first device may enable the intelligent channel access queue, and keep enabling the CSMA/CA queue. That is, the first device may access a channel in the intelligent channel access manner or the CSMA/CA channel access manner. The first device may first determine a channel access manner, and then map the data to a corresponding queue through the channel access manner mapping module.

In some implementations, if the first indication information indicates to disable the intelligent channel access function, the first device may enable the CSMA/CA channel access function.

For example, as shown in FIG. 6, the MAC architecture of the first device includes the CSMA/CA queue and the intelligent channel access queue. The first device disables the intelligent channel access queue, and enables the CSMA/CA queue. That is, the first device can access a channel only in the CSMA/CA channel access manner.

Optionally, if the first indication information indicates to enable the intelligent channel access function, the embodiment shown in FIG. 2 further includes step 204 and step 205. Step 204 and step 205 may be performed after step 203.

204: If the first indication information indicates the first device to enable the intelligent channel access function, the first device sends second indication information to a third device, where the second indication information indicates the third device to enable the intelligent channel access function.

For example, the first device is an AP, and the third device is a STA. The STA is a STA associated with the AP, that is, a STA managed by the AP. If the AP enables the intelligent channel access function by using the first indication information, the AP may indicate the STA to enable the intelligent channel access function.

205: The third device enables the intelligent channel access function based on the second indication information.

For example, the third device is a STA, and the STA enables an intelligent channel access queue in a MAC architecture of the STA, and keeps enabling a CSMA/CA queue in the MAC architecture of the STA; or the STA enables an intelligent channel access queue in a MAC architecture of the STA, and disables use of a CSMA/CA queue in the MAC architecture of the STA.

Optionally, if the first indication information indicates to disable the intelligent channel access function, the embodiment shown in FIG. 2 further includes step 206 and step 207. Step 206 and step 207 may be performed after step 203.

206: If the first indication information indicates the first device to disable the intelligent channel access function, the first device sends third indication information to a third device, where the third indication information indicates the third device to disable the intelligent channel access function.

For example, the first device is an AP, and the third device is a STA. The STA is a STA associated with the AP, that is, a STA managed by the AP. If the AP disables the intelligent channel access function based on the first indication information, the AP may indicate the STA to disable the intelligent channel access function.

207: The third device disables the intelligent channel access function based on the third indication information.

For example, the third device is a STA, and the STA may disable an intelligent channel access queue in a MAC architecture of the STA, and enable a CSMA/CA queue in the MAC architecture of the STA.

In this embodiment of this application, the first device receives the first indication information from the second device. The first indication information indicates the first device to enable or disable the intelligent channel access function. The intelligent channel access function is a function of accessing a channel based on the signal access decision output by the neural network. The first device enables or disables the intelligent channel access function based on the first indication information. It may be learned that the technical solutions of this application provide a new channel access function, and the first device may enable or disable the intelligent channel access function with reference to the first indication information, to enrich channel access functions supported by the first device. The intelligent channel access function is a function of accessing a channel based on the signal access decision output by the neural network. Therefore, the first device can access a channel based on the channel access decision output by the neural network. This helps avoid a communication collision between the first device and another device, to improve communication quality of the first device.

In this application, optionally, the first device may also include a display screen, a user interface is displayed on the display screen, and the user interface includes a first control used to enable or disable the intelligent channel access function. The first device may detect an operation performed by a user on the first control, and generate a second instruction. The first device enables or disables the intelligent channel access function in response to the second instruction. Descriptions are provided below with reference to a specific embodiment.

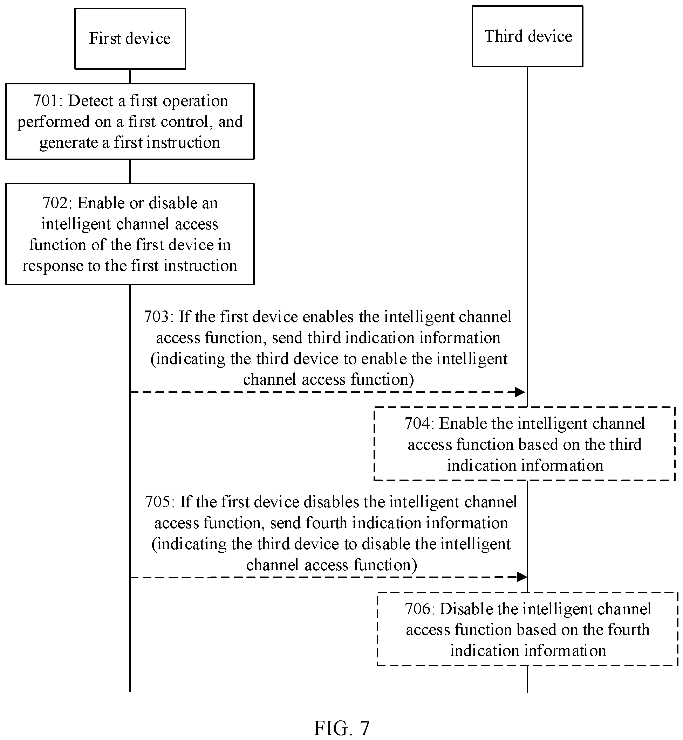

FIG. 7 is a schematic diagram of another embodiment of a communication method according to an embodiment of this application. With reference to FIG. 7, the method includes the following steps.

701: A first device detects a first operation performed on a first control, and generates a second instruction.

The first device includes a display screen, the display screen is configured to display a user interface, the user interface includes the first control, and the first control is used to enable an intelligent channel access function or disable the intelligent channel access function. The intelligent channel access function is a function of accessing a channel based on a signal access decision output by a neural network. For more related descriptions of the intelligent channel access function, refer to the related descriptions in the embodiment shown in FIG. 2. Details are not described herein.

Specifically, an application program used to enable or disable the intelligent channel access function may be installed in the first device. The first device may run the application program by invoking a corresponding module. A display interface of the application program includes the first control. The first control is used to enable the intelligent channel access function or disable the intelligent channel access function.

702: The first device enables or disables the intelligent channel access function of a second device in response to the second instruction.

The second instruction and a process of enabling or disabling the intelligent channel access function by the first device are described below with reference to some possible implementations of the first operation.

Implementation 1: If the first operation is tapping the first control to set the first control to a checked state, the second instruction may be understood as an instruction for enabling the intelligent channel access function, and the first device enables the intelligent channel access function in response to the instruction for enabling the intelligent channel access function. If the first operation is tapping the first control to set the first control to an unchecked state, the second instruction may be understood as an instruction for disabling the intelligent channel access function, and the first device disables the intelligent channel access function in response to the instruction for disabling the intelligent channel access function. It should be noted that optionally, the first control may be set to the unchecked state by default.

For example, as shown in FIG. 3, a user interface is displayed on the display screen of the first device, the user interface includes the first control, and the first control is "enable intelligent channel access" (Enable Intelligent Channel Access). If a user taps the first control to set the first control to the checked state, the first device generates the instruction for enabling the intelligent channel access function. The first device enables the intelligent channel access function in response to the instruction for enabling the intelligent channel access function. If a user taps the first control to set the first control to the unchecked state, the first device generates the instruction for disabling the intelligent channel access function. The first device disables the intelligent channel access function in response to the instruction for disabling the intelligent channel access function.

Implementation 2: If the first operation is tapping the first control to set the first control to an enabled (Enabled) state, the first device generates an instruction for enabling the intelligent channel access function. The first device enables the intelligent channel access function in response to the instruction for enabling the intelligent channel access function. If the first operation is tapping the first control to set the first control to a disabled (Disabled) state, the first device generates an instruction for disabling the intelligent channel access function. The first device disables the intelligent channel access function in response to the instruction for disabling the intelligent channel access function.

For example, as shown in FIG. 4, a Wi-Fi configuration interface is displayed on the display screen of the first device, the Wi-Fi configuration interface includes the first control, the first control is "intelligent channel access" in the Wi-Fi configuration interface, and the first control is used to enable the intelligent channel access function or disable the intelligent channel access function. If a user sets the first control to the enabled (Enabled) state, the first device generates the instruction for enabling the intelligent channel access function. The first device enables the intelligent channel access function in response to the instruction for enabling the intelligent channel access function. If a user sets the first control to the disabled (Disabled) state, the first device generates the instruction for disabling the intelligent channel access function. The first device disables the intelligent channel access function in response to the instruction for disabling the intelligent channel access function. It should be noted that optionally, the first control may be set to the disabled (Disabled) state by default.

Implementation 3: If the first operation is that a user taps the first control to set the first control to an on state, the first device generates an instruction for enabling the intelligent channel access function. The first device enables the intelligent channel access function in response to the instruction for enabling the intelligent channel access function. If the first operation is tapping the first control to set the first control to an off state, the first device generates an instruction for disabling the intelligent channel access function. The first device disables the intelligent channel access function in response to the instruction for disabling the intelligent channel access function.

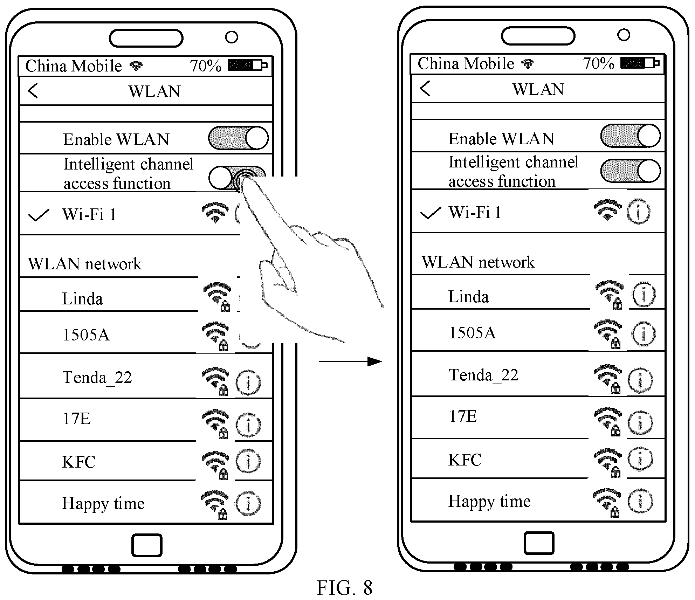

For example, as shown in FIG. 8, the display screen of the first device is a trigger screen, and the first control used to enable or disable the intelligent channel access function is displayed on the trigger screen. If the user taps the first control to set the first control to the on state, the second instruction may be understood as an instruction for enabling the intelligent channel access function. The first device enables the intelligent channel access function in response to the instruction for enabling the intelligent channel access function.

In some implementations, if the first device enables the intelligent channel access function, the first device may keep enabling a CSMA/CA channel access function; or if the first device enables the intelligent channel access function, the first device may disable a CSMA/CA channel access function. For the CSMA/CA channel access function, refer to the foregoing related descriptions.

In some implementations, if the first device disables the intelligent channel access function, the first device may enable the CSMA/CA channel access function.

Optionally, if the first device enables the intelligent channel access function, the embodiment shown in FIG. 7 further includes step 703 and step 704. Step 703 and step 705 are performed after step 702.

703: If the first device enables the intelligent channel access function, the first device sends fourth indication information to a third device.

The fourth indication information indicates the third device to enable the intelligent channel access function.

For example, the first device is an AP, and the third device is a STA. The STA is a STA associated with the AP, that is, a STA managed by the AP. If the AP enables the intelligent channel access function, the AP may indicate the STA to enable the intelligent channel access function.

704: The third device enables the intelligent channel access function based on the fourth indication information.

Specifically, the third device enables the intelligent channel access function based on the fourth indication information. Optionally, the third device may keep enabling the CSMA/CA channel access function, or the third device may disable the CSMA/CA channel access function.

For example, the third device is a STA, and the STA enables an intelligent channel access queue in a MAC architecture of the STA, and keeps enabling a CSMA/CA queue in the MAC architecture of the STA; or the STA enables an intelligent channel access queue in a MAC architecture of the STA, and disables use of a CSMA/CA queue in the MAC architecture of the STA. The MAC architecture of the third device is similar to the MAC architecture of the first device described in the embodiment shown in FIG. 2. For details, refer to the foregoing related descriptions.

705: If the first device disables the intelligent channel access function, the first device sends fifth indication information to a third device.

The fifth indication information indicates the third device to disable the intelligent channel access function.

For example, the first device is an AP, and the third device is a STA. The STA is a STA associated with the AP, that is, a STA managed by the AP. If the AP disables the intelligent channel access function, the AP may indicate the STA to disable the intelligent channel access function.

706: The third device disables the intelligent channel access function based on the fifth indication information.

For example, the third device is a STA, and the STA may disable an intelligent channel access queue in a MAC architecture of the STA, and enable a CSMA/CA queue in the MAC architecture of the STA.

In this embodiment of this application, the first device detects the first operation performed on the first control, and generates the second instruction. The first device includes the display screen, the display screen is configured to display a user interface, the user interface includes the first control, and the first control is used to enable the intelligent channel access function or disable the intelligent channel access function. The intelligent channel access function is a function of accessing a channel based on the signal access decision output by the neural network. The first device enables or disables the intelligent channel access function in response to the second instruction. It may be learned that the technical solutions of this application provide a new channel access function, and the first device enables or disables the intelligent channel access function based on the second instruction, to enrich channel access functions supported by the first device. The intelligent channel access function is a function of accessing a channel based on the signal access decision output by the neural network. The first device can access a channel based on the channel access decision output by the neural network. This helps avoid a communication collision between the first device and another device, to improve communication quality of the first device.

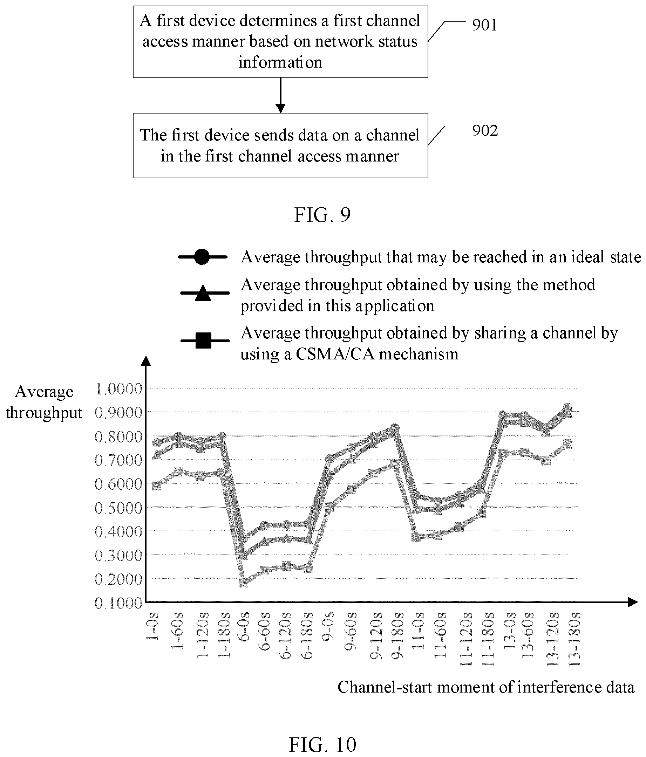

In this application, if the first device enables the intelligent channel access function, and keeps enabling the CSMA/CA channel access function, a channel access process of the first device is described below in detail with reference to an embodiment shown in FIG. 9. It should be noted that if the third device enables the intelligent channel access function, and keeps enabling the CSMA/CA channel access function, a channel access process of the third device is similar to the implementation process shown in FIG. 9. For details, refer to the following related descriptions.

FIG. 9 is a schematic diagram of another embodiment of a communication method according to an embodiment of this application. With reference to FIG. 9, the communication method includes the following steps.

901: A first device determines a first channel access manner based on network status information.

The first channel access manner is a CSMA/CA channel access manner or an intelligent channel access manner. The CSMA/CA channel access manner is a channel access manner provided by a CSMA/CA channel access function. The intelligent channel access manner is a channel access manner provided by an intelligent channel access function.

Optionally, the CSMA/CA channel access manner includes at least one of the following: a distributed coordination function (distributed coordination function, DCF) channel access manner or an enhanced distributed channel access (enhanced distributed channel access, EDCA) manner.

In some implementations, the network status information includes at least one of the following: a network interference degree, a network topology structure, and a service busyness degree.

For example, the network interference degree may be represented by using an energy detection value and a carrier sense value that are detected by the first device. The network topology structure may be used to determine whether there is a hidden terminal in a BSS in which the first device is located. The service busyness degree may be represented by using a busyness degree of a channel. For example, the service busyness degree may be represented by using duration in which a data packet is transmitted on the channel. The first device may select the first channel access manner based on the service busyness degree.

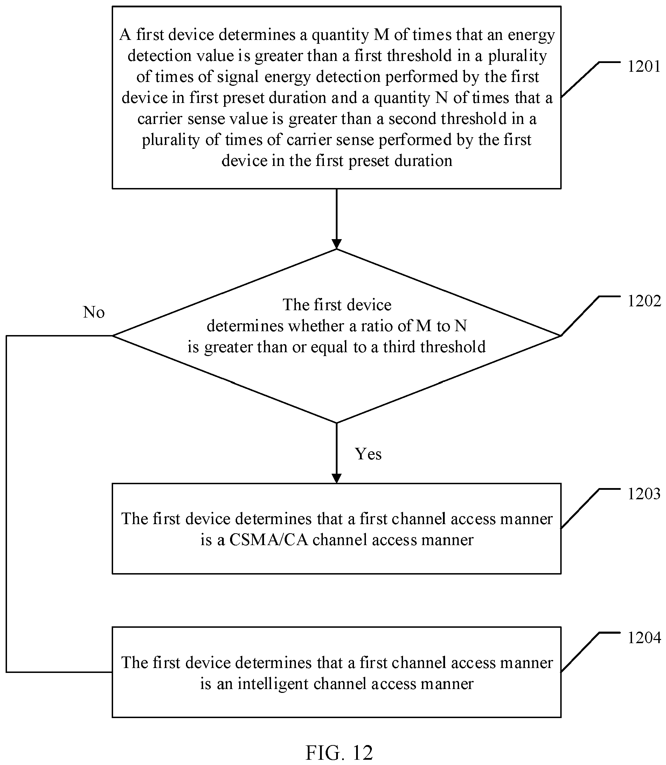

In step 901, the first device determines the first channel access manner based on the network status information in a plurality of manners. Several possible implementations are described below by using embodiments shown in FIG. 12, FIG. 13, and FIG. 14. For details, refer to the following related descriptions. Details are not described herein.

For example, as shown in FIG. 6, a MAC architecture of the first device includes a CSMA/CA queue and an intelligent channel access queue. The first device determines, through an access manner mapping module, to map data to the CSMA/CA queue or to the intelligent channel access queue. For example, if the first channel access manner is the intelligent channel access manner, the first device maps the data to the intelligent channel access queue. Optionally, there are a plurality of intelligent channel access queues, and different intelligent channel access queues have different priorities. The first device may map the data to an intelligent channel access queue with a corresponding priority based on a QoS indication. For example, if the first channel access manner is the CSMA/CA channel access manner, the first device maps the data to the CSMA/CA queue. Optionally, there are a plurality of CSMA/CA queues, and different CSMA/CA queues have different priorities. The first device may map the data to a CSMA/CA queue with a corresponding priority based on a QoS indication. When data in a plurality of queues is to be simultaneously dequeued, a virtual collision resolution module determines that only one queue is finally to be dequeued. Usually, the virtual collision resolution module may select a queue with a higher priority.

902: The first device sends data on a channel in the first channel access manner.

The first channel access manner is the CSMA/CA channel access manner or the intelligent channel access manner.

In a possible implementation, the first channel access manner is the CSMA/CA channel access manner, and the first device sends the data on the channel in the CSMA/CA channel access manner.

For example, as shown in FIG. 6, the first device is a STA, and the first channel access manner is the CSMA/CA channel access manner. The STA determines, based on a QoS indication of the data, that the data has a high priority, and maps the data to a CSMA/CA queue 1. A priority of the CSMA/CA queue 1 (AC_VO) is higher than a priority of a CSMA/CA queue 2 (AC_VI), the priority of the CSMA/CA queue 2 (AC_VI) is higher than a priority of a CSMA/CA queue 3 (AC_BE), and the priority of the CSMA/CA queue 3 (AC_BE) is higher than a priority of a CSMA/CA queue 4 (AC_BK). A queue parameter of the CSMA/CA queue may include a minimum contention window (minimum contention window, CWmin), a maximum contention window (maximum contention window, CWmax), an arbitration inter-frame space (arbitration inter-frame space, AIFS), and a maximum transmit opportunity (maximum transmit opportunity, Max TXOP). The STA sends the data on the channel by using a queue parameter of the CSMA/CA queue 1.

In another possible implementation, the first channel access manner is the intelligent channel access manner, and the first device sends the data on the channel in the intelligent channel access manner.

A possible implementation in which the first communication device sends the data on the channel in the intelligent channel access manner is described below. Optionally, step 902 specifically includes step 902a and step 902b.

902a: The first device maps the data to the intelligent channel access queue.

The MAC architecture of the first device includes the intelligent channel access queue and a queue parameter determining module. The intelligent channel access queue carries data that accesses a channel in the intelligent channel access manner. The queue parameter determining module is configured to determine a queue parameter of the intelligent channel access queue. The first device maps the data to the intelligent channel access queue.

For example, as shown in FIG. 6, the first device determines that the first channel access manner is the intelligent channel access manner, and the first device may map the data to an intelligent channel access queue 1 based on a QoS indication of the data.

902b: The first device sends the data on the channel by using the queue parameter that is of the intelligent channel access queue and that is output by a neural network.

For example, a structure of the neural network may be a residual neural network (residual neural network, ResNet) structure.

Optionally, the queue parameter of the intelligent channel access queue includes a sending probability p of the data or sixth indication information. The sixth indication information indicates whether to send the data. The sending probability p is greater than or equal to 0 and less than or equal to 1.

Step 902b is described below with reference to specific content of the queue parameter of the intelligent channel access queue.

In a possible implementation, the queue parameter of the intelligent channel access queue includes the sending probability of the data. Step 902b specifically includes step 9001 to step 9004.

9001: The first device generates a random number corresponding to the data.

9002: The first device determines whether the random number is greater than the sending probability. If the random number is greater than the sending probability, step 9003 is performed. If the random number is not greater than the sending probability, step 9004 is performed.

9003: The first device does not send the data on the channel.

9004: The first device sends the data on the channel.

In another possible implementation, the queue parameter of the intelligent channel access queue includes the sixth indication information. Step 902b specifically includes: If the sixth indication information indicates to send the data, the first device sends the data on the channel; or if the sixth indication information indicates not to send the data, the first device does not send the data on the channel.

For example, if the sixth indication information is "0", it indicates that the first device does not send the data on the channel; and if the sixth indication information is "1", it indicates that the first device sends the data on the channel.

It should be noted that in step 902a and step 902b, optionally, the first device keeps a backoff value of the CSMA/CA queue in the first device unchanged, or resets a backoff value of the CSMA/CA queue.

In step 902b, the first device obtains the queue parameter of the intelligent channel access queue through the neural network. With reference to step a and step b, a possible implementation in which the first device obtains the queue parameter of the intelligent channel access queue through the neural network is described below.

Step a: The first device obtains a received signal strength indicator RSSI in first preset duration.

For example, the first device may perform signal detection in the first preset duration, to obtain the RSSI in the first preset duration. Optionally, the first device may perform signal energy detection in the first preset duration, to obtain an energy detection value, and perform carrier sense in the first preset duration, to obtain a carrier sense value. The RSSI in the first preset duration may be a ratio of the energy detection value to the carrier sense value. The RSSI in the first preset duration may be understood as an environment status parameter obtained by the queue parameter determining module.

Step b: The first device obtains the queue parameter of the intelligent channel access queue based on the RSSI in the first preset duration and the neural network.

For example, the first device performs normalization processing on the RSSI in the first preset duration. Then, the first device inputs an RSSI obtained after normalization processing to the neural network, to obtain the queue parameter that is of the intelligent channel access queue and that is output by the neural network, for example, the sending probability of the data or the sixth indication information.

For example, the first device performs sampling at a sampling interval of 9 µs (microseconds) to obtain the RSSI in the first preset duration. The RSSI in the first preset duration includes 360 RSSIs. A value range of the 360 RSSIs is [-100, -40]. The first device normalizes the value range [-100, -40] of the RSSI to an interval of [-1, 1], and the first device inputs the RSSI obtained after normalization processing to the neural network, to obtain the queue parameter that is of the intelligent channel access queue and that is output by the neural network.

It should be noted that optionally, the first device may regularly update the RSSI input to the neural network; the first device may periodically update the RSSI input to the neural network; or each time data is sent, the first device updates the RSSI input to the neural network.

For the manner in which each time data is sent, the first device updates the RSSI input to the neural network: In step 901b, if the first device does not send the data on the channel, the first device may replace the RSSI obtained in the first preset duration with an RSSI obtained by the first device at a current moment, and use the RSSI as an input parameter of the neural network, so that the neural network outputs a sending probability or a sending indication of next to-be-sent data. In step 901b, if the first device sends the data on the channel, the first device cannot obtain the RSSI in a data transmission process. Therefore, after sending of the data ends, the first device may update the RSSI input to the neural network. For example, if the first device successfully transmits the data on the channel, the first device may use X small RSSI values as input parameters of the neural network, for example, 120 random numbers in an interval of [-0.8, -0.5]; or if the first device fails to transmit the data on the channel, the first device may use X large RSSI values as input parameters of the neural network, for example, 120 random numbers in an interval of [0.5, 0.8], where X is a length of the data.

For example, as shown in FIG. 1B, a STA 1 and a STA 2 share a channel 1. The STA 1 uses an intelligent channel access manner, and the STA2 uses a CSMA/CA channel access manner. The STA 1 accesses the channel 1 by using a process shown in step 902a and step 902b. The STA 1 may send data on the channel by using a queue parameter that is of an intelligent channel access queue and that is output by a neural network, to reduce a probability that a communication collision occurs between the STA 1 and the STA2 on the channel 1. For example, the neural network in the STA 1 may determine, by using an RSSI in a period of time, a rule of sending data by the STA 2 in the period of time. For example, if the STA 2 sends data every 1 second, the STA 1 may avoid a time in which the STA 2 sends data on the channel 1. In this way, a communication collision between the STA 1 and the STA 2 is avoided, and communication performance is improved.

For the first device, according to the communication method provided in this application, communication quality of the first device may be improved, and a communication collision between nodes may be avoided. For example, FIG. 10 is a schematic effect diagram of a communication method according to an embodiment of this application. As shown in FIG. 10, a horizontal coordinate represents a channel-a start moment of interference data. For example, a horizontal coordinate of 9-180s represents interference data at a start moment of 180s on a channel 9. A vertical coordinate represents an average throughput. The average throughput is obtained by collecting statistics on data that is on a channel represented by using a corresponding horizontal coordinate and that is within 60s starting from a start moment represented by using the horizontal coordinate. FIG. 10 shows an optimal value that may be reached by the average throughput in an ideal state, an average throughput obtained by sharing a channel by using a CSMA/CA mechanism, and an average throughput obtained by using the communication method provided in this application. It may be learned that the average throughput obtained by using the communication method provided in this application is clearly greater than the average throughput obtained by sharing a channel based on the CSMA/CA mechanism. It may be learned that for the first device, according to the communication method in this application, a system throughput can be improved.

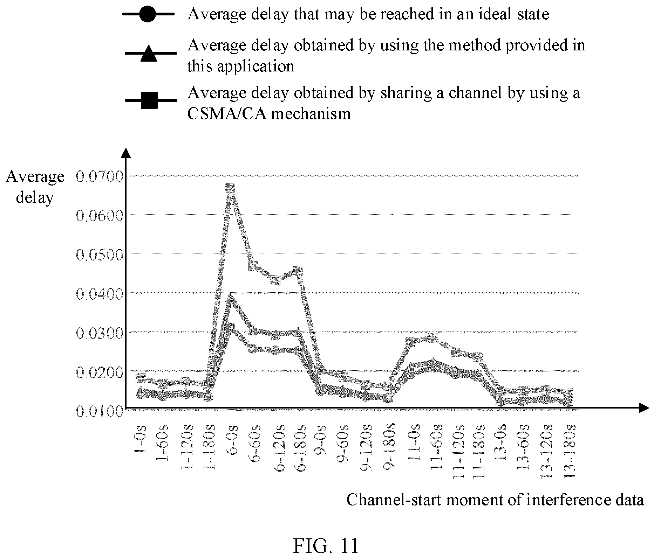

For example, FIG. 11 is another schematic effect diagram of a communication method according to an embodiment of this application. As shown in FIG. 11, a horizontal coordinate represents a channel-a start moment of interference data. For example, a horizontal coordinate of 9-180s represents interference data at a start moment of 180s on a channel 9. A vertical coordinate represents an average delay. The average delay is obtained by collecting statistics on data that is on a channel represented by using a corresponding horizontal coordinate and that is within 60s starting from a start moment represented by using the horizontal coordinate. FIG. 11 shows an optimal value that may be reached by the average delay in an ideal state, an average delay obtained by the first device by sharing a channel by using a CSMA/CA mechanism, and an average delay obtained by the first device by using the communication method provided in this application. It may be learned that the average delay obtained by the first device by using the communication method provided in this application is clearly less than the average delay obtained by the first device by sharing a channel by using the CSMA/CA mechanism. It may be learned that for the first device, according to the communication method in this application, a data transmission delay can be reduced, and communication transmission quality can be improved.

In this embodiment of this application, the first device determines the first channel access manner based on the network status information. The first channel access manner is the CSMA/CA channel access manner or the intelligent channel access manner. The intelligent channel access manner is a manner of accessing a channel based on the channel access decision obtained by the neural network. The first device sends the data on a channel in the first channel access manner. It may be learned that the first device may select a channel access manner based on the network status information, and send the data in the selected channel access manner. The channel access manner may be the CSMA/CA channel access manner or the intelligent channel access manner. The intelligent channel access manner is a manner of accessing a channel based on the channel access decision obtained by the neural network. Therefore, a communication collision between the first device and another node in a network is avoided, to implement interference avoidance, improve communication quality of the node, and improve user experience.

In this application, if the first device disables the intelligent channel access function, the CSMA/CS channel access function is enabled. The first device may access a channel in the CSMA/CA channel access manner. If a third device disables the intelligent channel access function, the CSMA/CS channel access function is enabled. The third device may access a channel in the CSMA/CA channel access manner. For a specific access process, refer to the related descriptions of the process in which the first device accesses a channel in the CSMA/CA channel access manner in step 902 in the embodiment shown in FIG. 9.

In this application, if the first device enables the intelligent channel access function, the CSMA/CS channel access function is disabled. The first device may access a channel in the intelligent channel access manner. If a third device enables the intelligent channel access function, the CSMA/CS channel access function is disabled. The third device may access a channel in the CSMA/CA channel access manner. For a specific access process, refer to the related descriptions of the process in which the first device accesses a channel in the intelligent channel access manner in step 902 in the embodiment shown in FIG. 9.

With reference to embodiments shown in FIG. 12 to FIG. 14, several possible implementations in which the first device determines the first channel access manner based on the network status information are described below.

FIG. 12 is a schematic diagram of another embodiment of a communication method according to an embodiment of this application. With reference to FIG. 12, the communication method includes the following steps.

1201: A first device determines a quantity M of times that an energy detection value is greater than a first threshold in a plurality of times of signal energy detection performed by the first device in first preset duration and a quantity N of times that a carrier sense value is greater than a second threshold in a plurality of times of carrier sense performed by the first device in the first preset duration, where both M and N are integers greater than or equal to 1.

For example, the first preset duration may be 1s, the first threshold may be -82 dBm (decibel relative to one milliwatt), and the second threshold may be -62 dBm.

1202: The first device determines whether a ratio of M to N is greater than or equal to a third threshold. If the ratio of M to N is greater than or equal to the third threshold, step 1203 is performed. If the ratio of M to N is less than a third threshold, step 1204 is performed.

Optionally, the third threshold may be set based on an empirical value. For example, the third threshold is 0.7 or 0.8.

For example, the first device is a STA. When the STA performs channel energy detection, the STA can detect signal energy of all systems in an environment. However, when the STA performs carrier sense, the STA can sense signal energy only of a system in which the STA is located. Therefore, if the ratio of M to N is greater than or equal to the third threshold, it indicates that there are a large quantity of homogeneous nodes in the environment, that is, most nodes access a channel in a CSMA/CA channel access manner, and the STA may determine that a first channel access manner is the CSMA/CA channel access manner. The homogeneous node is a node that accesses a channel in the CSMA/CA channel access manner. If the ratio of M to N is less than the third threshold, the STA may determine that there are a large quantity of heterogeneous nodes in the environment and interference is strong, and the STA may determine that a first channel access manner is an intelligent channel access manner. The heterogeneous node is a node that accesses a channel in a channel access manner other than a CSMA/CA channel access manner.

1203: The first device determines that the first channel access manner is the CSMA/CA channel access manner.

If the ratio of M to N is greater than or equal to the third threshold, the first device may send data in the CSMA/CA channel access manner. For example, the first device is a STA, and the STA maps the data to a CSMA/CA queue, and sends the data on the channel by using a queue parameter of the CSMA/CA queue.

1204: The first device determines that the first channel access manner is the intelligent channel access manner.

If the ratio of M to N is less than the third threshold, the first device may send data in the intelligent channel access manner. For example, the STA maps the data to an intelligent channel access queue, and sends the data on the channel by using a queue parameter that is of the intelligent channel access queue and that is output by a neural network.

A specific solution in which the first device determines the first channel access manner based on a network status parameter is provided in the embodiment shown in FIG. 12. The first device may select a corresponding channel access manner based on a network interference degree (represented by using the energy detection value and the carrier sense value). For example, when the network interference degree is high, the first device may select the intelligent channel access manner, to facilitate interference avoidance, so as to avoid a communication collision between the first device and another node, and improve communication transmission performance. When the network interference degree is low, the first device may select the CSMA/CA channel access manner.

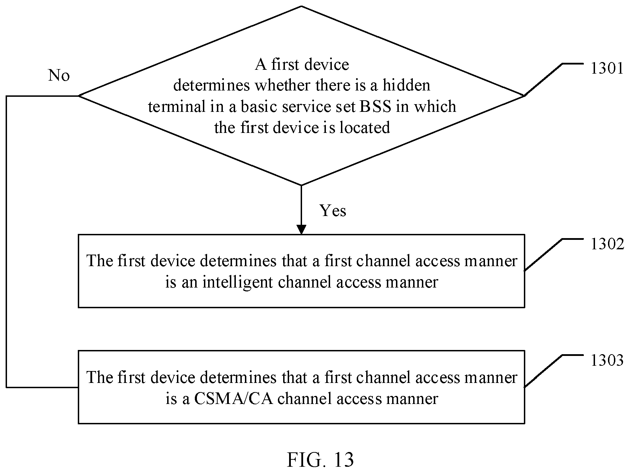

FIG. 13 is a schematic diagram of another embodiment of a communication method according to an embodiment of this application. With reference to FIG. 13, the communication method includes the following steps.

1301: A first device determines whether there is a hidden terminal in a BSS in which the first device is located. If there is a hidden terminal in the BSS in which the first device is located, step 1302 is performed. If there is no hidden terminal in the BSS in which the first device is located, step 1303 is performed.

For example, a STA 1 and a STA 2 are located in a BSS in which an AP is located, the STA 1 communicates with the AP, and the STA 2 communicates with the AP. The STA 1 can sense a signal of the AP, but cannot sense a signal of the STA 2. That is, the STA 1 is located in the BSS in which the AP is located, but is not located in a signal coverage area of the STA 2. However, for the STA 1, the STA2 is a hidden terminal. In this case, the AP may determine that there is a hidden terminal in the BSS.

1302: The first device determines that a first channel access manner is an intelligent channel access manner.

If there is a hidden terminal in the BSS in which the first device is located, the first device selects the intelligent channel access manner.

1303: The first device determines that a first channel access manner is a CSMA/CA channel access manner.

If there is no hidden terminal in the BSS in which the first device is located, the first device selects the CSMA/CA channel access manner.

Another solution in which the first device determines the first channel access manner based on a network status parameter is provided in the embodiment shown in FIG. 13. The first device may select a corresponding channel access manner based on a network topology structure. For example, when there is no hidden terminal in the BSS in which the first device is located, the first device selects the CSMA/CA channel access manner, to avoid a communication collision between the first device and the hidden terminal.

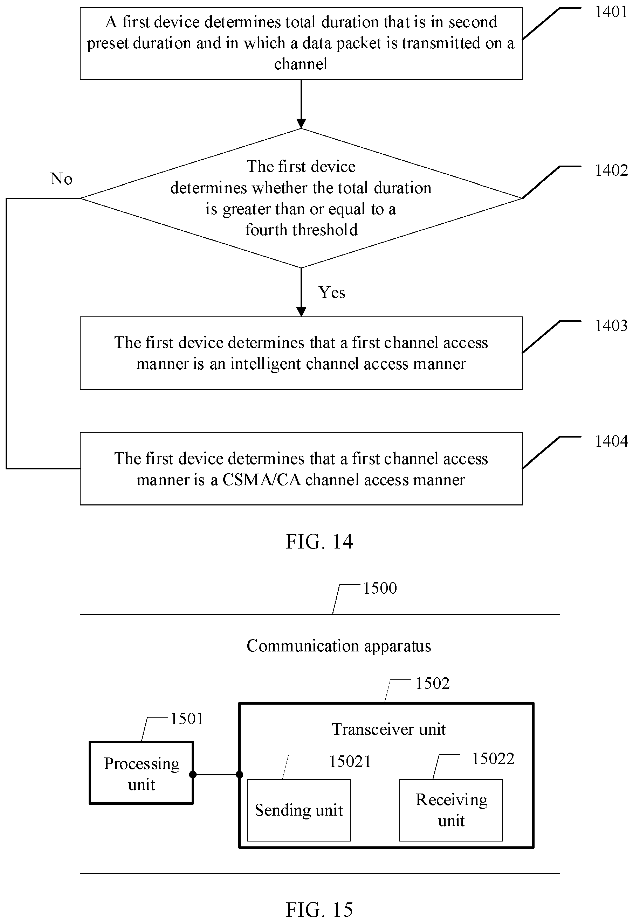

FIG. 14 is a schematic diagram of another embodiment of a communication method according to an embodiment of this application. With reference to FIG. 14, the communication method includes the following steps.

1401: A first device determines total duration that is in second preset duration and in which a data packet is transmitted on a channel.

Optionally, the second preset duration may fall within a range from 5s to 20s. The second preset duration may be 5s, 10s, 12s, or the like.

1402: The first device determines whether the total duration is greater than or equal to a fourth threshold. If the total duration is greater than or equal to the fourth threshold, step 1403 is performed. If the total duration is less than the fourth threshold, step 1404 is performed.

Optionally, the fourth threshold may be set based on an empirical value. For example, the second preset duration is 5s, and the fourth threshold may be 2.5s.

Specifically, the first device may determine a busyness degree of the channel. When the channel is busy, the first device may send data in an intelligent channel access manner. Otherwise, the first device may send data in a CSMA/CA channel access manner. Specifically, the first device may determine the busyness degree of the channel by using the total duration that is in the second preset duration and in which a data packet is transmitted on the channel. For example, when the total duration is greater than the fourth threshold, it indicates that the channel is busy; and when the total duration is less than the fourth threshold, it indicates that the channel is idle.

1403: The first device determines that a first channel access manner is the intelligent channel access manner.

If the total duration is greater than or equal to the fourth threshold, the first device determines that the first channel access manner is the intelligent channel access manner.

1404: The first device determines that a first channel access manner is the CSMA/CA channel access manner.

If the total duration is less than the fourth threshold, the first device determines that the first channel access manner is the CSMA/CA channel access manner.

Another solution in which the first device determines the first channel access manner based on a network status parameter is provided in the embodiment shown in FIG. 14. The first device may select a corresponding channel access manner based on the busyness degree of the channel. For example, when the channel is busy, the first device selects the intelligent channel access manner, to avoid a communication collision with another node on the channel.

The communication method provided in embodiments of this application is described above. A communication apparatus provided in this application is described below.

FIG. 15 is a schematic diagram of a structure of a communication apparatus according to an embodiment of this application. With reference to FIG. 15, the communication apparatus 1500 includes a processing unit 1501 and a transceiver unit 1502.

Optionally, the transceiver unit 1502 is configured to perform a receiving or sending process of the communication apparatus 1500. Therefore, the transceiver unit 1502 may also be represented as a sending unit 15021 configured to perform the sending process of the communication apparatus 1500, and/or the transceiver unit 1502 may also be represented as a receiving unit 15022 configured to perform the receiving process of the communication apparatus 1500.

Optionally, the communication apparatus 1500 is configured to perform an implementation process of the first device in the foregoing embodiments of this application. Specifically, the communication apparatus 1500 may be configured to perform steps performed by the first device in the embodiments shown in FIG. 2, FIG. 9, FIG. 12, FIG. 13, and FIG. 14. For details, refer to the related descriptions in the embodiments shown in FIG. 2, FIG. 9, FIG. 12, FIG. 13, and FIG. 14.

For example, the transceiver unit 1502 is configured to perform step 202 in the embodiment shown in FIG. 2, and the processing unit 1501 is configured to perform step 203 in the embodiment shown in FIG. 2. Optionally, the transceiver unit 1502 is further configured to perform step 204 or step 206 in the embodiment shown in FIG. 2.

For example, the processing unit 1501 is configured to perform step 901 and step 902 in the embodiment shown in FIG. 9.

For example, the processing unit 1501 is configured to perform step 1201 and step 1204 in the embodiment shown in FIG. 12.

For example, the processing unit 1501 is configured to perform step 1301 and step 1303 in the embodiment shown in FIG. 13.

For example, the processing unit 1501 is configured to perform step 1401 and step 1404 in the embodiment shown in FIG. 14.

Optionally, the communication apparatus 1500 is configured to perform an implementation process of the second device in the foregoing embodiments of this application. Specifically, the communication apparatus 1500 may be configured to perform steps performed by the second device in the embodiment shown in FIG. 2. For details, refer to the related descriptions in the embodiment shown in FIG. 2.

For example, the processing unit 1501 is configured to perform step 201 in the embodiment shown in FIG. 2, and the transceiver unit 1502 is configured to perform step 202 in the embodiment shown in FIG. 2.

Optionally, the communication apparatus 1500 is configured to perform an implementation process of the third device in the foregoing embodiments of this application. Specifically, the communication apparatus 1500 may be configured to perform steps performed by the third device in the embodiments shown in FIG. 2 and FIG. 7. For details, refer to the related descriptions in the embodiments shown in FIG. 2 and FIG. 7.

For example, the transceiver unit 1502 is configured to perform step 204 in the embodiment shown in FIG. 2, and the processing unit 1501 is configured to perform step 205 in the embodiment shown in FIG. 2. Alternatively, the transceiver unit 1502 is configured to perform step 206 in the embodiment shown in FIG. 2, and the processing unit 1501 is configured to perform step 207 in the embodiment shown in FIG. 2.

For example, the transceiver unit 1502 is configured to perform step 703 in the embodiment shown in FIG. 7, and the processing unit 1501 is configured to perform step 704 in the embodiment shown in FIG. 7. Alternatively, the transceiver unit 1502 is configured to perform step 705 in the embodiment shown in FIG. 7, and the processing unit 1501 is configured to perform step 706 in the embodiment shown in FIG. 7.

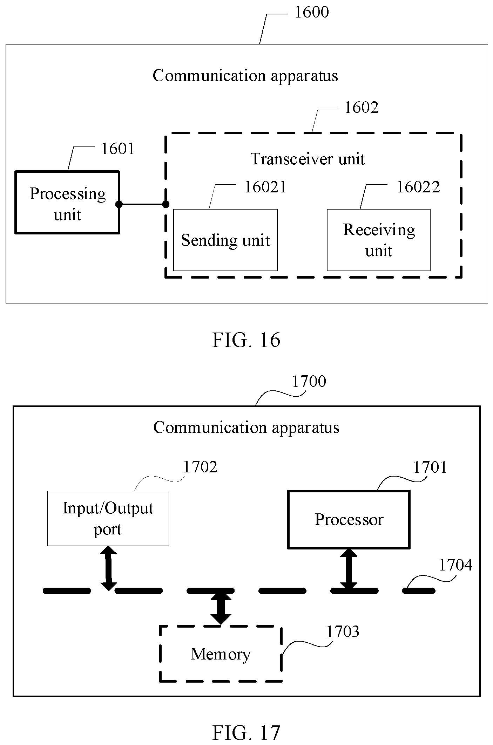

FIG. 16 is another schematic diagram of a structure of a communication apparatus according to an embodiment of this application. With reference to FIG. 16, the communication apparatus 1600 includes a processing unit 1601. Optionally, the communication apparatus 1600 further includes a transceiver unit 1602.

Optionally, the transceiver unit 1602 is configured to perform a receiving or sending process of the communication apparatus 1600. Therefore, the transceiver unit 1602 may also be represented as a sending unit 16021 configured to perform the sending process of the communication apparatus 1600, and/or the transceiver unit 1602 may also be represented as a receiving unit 16022 configured to perform the receiving process of the communication apparatus 1600.

Optionally, the communication apparatus 1600 is configured to perform an implementation process of the first device in the foregoing embodiments of this application. Specifically, the communication apparatus 1600 may be configured to perform steps performed by the first device in the embodiment shown in FIG. 7. For details, refer to the related descriptions in the embodiment shown in FIG. 7.

For example, the processing unit 1601 is configured to perform step 701 and step 702 in the embodiment shown in FIG. 7. Optionally, the transceiver unit 1602 is further configured to perform step 703 or step 705 in the embodiment shown in FIG. 7.

The AP and the STA in embodiments of this application are described above. Possible product forms of the AP and the STA are described below. It should be understood that the following descriptions are merely examples, and product forms of the AP and the STA in embodiments of this application are not limited thereto.

In a possible product form, the AP and the STAin embodiments of this application may be implemented by using general bus architectures.

For ease of description, FIG. 17 is a schematic diagram of a structure of a communication apparatus 1700 according to an embodiment of this application. The communication apparatus 1700 may be a first device, a second device, a third device, or a chip thereof. FIG. 17 shows only main components of the communication apparatus 1700. The communication apparatus 1700 includes a processor 1701 and an input/output port 1702.

Optionally, the input/output port 1702 may alternatively be referred to as a communication port, a communication interface, or the like.

Optionally, the communication apparatus 1700 may further include a memory 1703.

Optionally, a bus 1704 may be further added to the apparatus 1700, and the bus 1704 is configured to establish a connection between the input/output port 1702 and/or the memory 1703 and the processor 1701.

The processor 1701 is mainly configured to: process a communication protocol and communication data, control the entire communication apparatus, execute a software program, and process data of the software program. The memory 1703 is mainly configured to store the software program and the data. The input/output port 1702 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. For example, the input/output port 1702 may be a touchscreen, a display screen, or a keyboard, and is mainly configured to: receive data entered by a user, and output data to the user.

After the communication apparatus 1700 is powered on, the processor 1701 may read the software program in the memory 1703, interpret and execute instructions of the software program, and process the data of the software program. When data needs to be sent wirelessly, the processor 1701 performs baseband processing on the to-be-sent data, and then outputs a baseband signal to a radio frequency circuit. The radio frequency circuit performs radio frequency processing on the baseband signal, and then sends a radio frequency signal to the outside in a form of electromagnetic wave through the antenna. When data is to be sent to the communication apparatus, the radio frequency circuit receives a radio frequency signal through the antenna, converts the radio frequency signal into a baseband signal, and outputs the baseband signal to the processor 1701. The processor 1701 converts the baseband signal into data, and processes the data.

Optionally, the memory 1703 may be located in the processor 1701.

In any one of the foregoing designs, the processor 1701 may include a communication interface configured to implement receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1701 may store instructions. The instructions may be a computer program. The computer program is run on the processor 1701, to enable the communication apparatus 1700 to perform the method described in any one of the foregoing embodiments. The computer program may be embedded in the processor 1701. In this case, the processor 1701 may be implemented by hardware.

In an implementation, the communication apparatus 1700 may include a circuit, and the circuit may implement a sending, receiving, or communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured by using various IC technologies, for example, a complementary metal oxide semiconductor (complementary metal oxide semiconductor, CMOS), an N-channel metal oxide semiconductor (N-channel metal oxide semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 17. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be built into another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In a possible product form, the first device, the second device, and the third device in embodiments of this application may be implemented by general-purpose processors.

It should be understood that the communication apparatuses in the foregoing product forms have any function of the first device, the second device, and the third device in any one of the foregoing embodiments. Details are not described herein.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product is run on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through a receiver circuit, to enable the apparatus to perform the method in any one of the foregoing embodiments.

An embodiment of this application further provides a wireless communication system, including a first device and a second device. The first device is configured to perform the methods in the embodiments shown in FIG. 2, FIG. 9, FIG. 12, FIG. 13, and FIG. 14. The second device is configured to perform the method in the embodiment shown in FIG. 2. Optionally, the wireless communication system further includes a third device, and the third device is configured to perform the method in the embodiment shown in FIG. 2.

The method or algorithm steps described with reference to the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC.

A person skilled in the art should be aware that in the foregoing one or more examples, functions described in this application may be implemented by hardware, software, firmware, or any combination thereof. When being implemented by software, these functions may be stored in a computer-readable medium or transmitted as one or more instructions or code on a computer-readable medium. The computer-readable medium includes a computer-readable storage medium and a communication medium. The communication medium includes any medium that enables a computer program to be transmitted from a location to another location. The storage medium may be any available medium accessible to a general-purpose or dedicated computer.

In this application, unless otherwise specified, for same or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, wherein the method comprises:
receiving, by a first device, first indication information from a second device, wherein the first indication information indicates the first device to enable or disable an intelligent channel access function, and the intelligent channel access function is a function of accessing a channel based on a channel access decision output by a neural network; and
enabling or disabling, by the first device, the intelligent channel access function based on the first indication information.

2. The method according to claim 1, wherein if the first indication information indicates to enable the intelligent channel access function, the method further comprises:
disabling, by the first device, a carrier sense multiple access with collision avoidance CSMA/CA channel access function of the first device, or keeping enabling, by the first device, a CSMA/CA channel access function of the first device, wherein the CSMA/CA channel access function is a function of accessing a channel based on a CSMA/CA mechanism.

3. The method according to claim 1, wherein if the first indication information indicates to disable the intelligent channel access function, the method further comprises:
enabling, by the first device, a carrier sense multiple access with collision avoidance CSMA/CA channel access function of the first device, wherein the CSMA/CA channel access function is a function of accessing a channel based on a CSMA/CA mechanism.

4. The method according to any one of claims 1 to 3, wherein the method further comprises:
if the first indication information indicates the first device to enable the intelligent channel access function, sending, by the first device, second indication information to a third device, wherein the second indication information indicates the third device to enable the intelligent channel access function; or
if the first indication information indicates the first device to disable the intelligent channel access function, sending, by the first device, third indication information to a third device, wherein the third indication information indicates the third device to disable the intelligent channel access function.

5. The method according to claim 1, 2, or 4, wherein if the first device enables the intelligent channel access function, and keeps enabling the carrier sense multiple access with collision avoidance CSMA/CA channel access function of the first device, wherein the CSMA/CA channel access function is the function of accessing a channel based on the CSMA/CA mechanism, the method further comprises:
determining, by the first device, a first channel access manner based on a network status parameter, wherein the first channel access manner is an intelligent channel access manner or a carrier sense multiple access with collision avoidance CSMA/CA channel access manner, the intelligent channel access manner is a channel access manner provided by the intelligent channel access function, the CSMA/CA channel access manner is a channel access manner provided by the CSMA/CA channel access function of the first device, and the CSMA/CA channel access function is the function of accessing a channel based on the CSMA/CA mechanism; and
sending, by the first device, data on a channel in the first channel access manner.

6. The method according to claim 5, wherein the intelligent channel access manner is a manner of accessing a channel based on a channel access decision obtained by the neural network based on an environment status parameter.

7. The method according to claim 6, wherein the environment status parameter comprises at least one of the following: a received signal strength indicator RSSI obtained by the first device, an energy detection value obtained by performing signal energy detection by the first device, and a carrier sense value obtained by performing carrier sense by the first device.

8. The method according to any one of claims 5 to 7, wherein the determining, by the first device, a first channel access manner based on a network status parameter comprises:
determining, by the first device, a quantity M of times that an energy detection value is greater than a first threshold in a plurality of times of signal energy detection performed by the first device in first preset duration and a quantity N of times that a carrier sense value is greater than a second threshold in a plurality of times of carrier sense performed by the first device in the first preset duration, wherein both M and N are integers greater than or equal to 1; and
if a ratio of M to N is greater than or equal to a third threshold, determining, by the first device, that the first channel access manner is the CSMA/CA channel access manner; or
if a ratio of M to N is less than a third threshold, determining, by the first device, that the first channel access manner is the intelligent channel access manner.

9. The method according to any one of claims 5 to 7, wherein the determining, by the first device, a first channel access manner based on network status information comprises:
if there is a hidden terminal in a basic service set BSS in which the first device is located, determining, by the first device, that the first channel access manner is the intelligent channel access manner; or
if there is no hidden terminal in a BSS in which the first device is located, determining, by the first device, that the first channel access manner is the CSMA/CA channel access manner.

10. The method according to any one of claims 5 to 7, wherein the determining, by the first device, a first channel access manner based on network status information comprises:
determining, by the first device, total duration that is in second preset duration and in which a data packet is transmitted on the channel; and
if the total duration is greater than or equal to a fourth threshold, determining, by the first device, that the first channel access manner is the intelligent channel access manner; or
if the total duration is less than a fourth threshold, determining, by the first device, that the first channel access manner is the CSMA/CA channel access manner.

11. The method according to any one of claims 5 to 10, wherein the first channel access manner is the intelligent channel access manner, and the sending, by the first device, data on a channel in the first channel access manner comprises:
mapping, by the first device, the data to an intelligent channel access queue, wherein the intelligent channel access queue carries data that accesses a channel in the intelligent channel access manner; and
sending, by the first device, the data on the channel by using a queue parameter that is of the intelligent channel access queue and that is output by the neural network.

12. A communication method, wherein the method is applied to a second device, the second device comprises a display screen, the display screen is configured to display a user interface, the user interface comprises a first control, the first control is used to enable an intelligent channel access function or disable the intelligent channel access function, the intelligent channel access function is a function of accessing a channel based on a channel access decision output by a neural network, and the method comprises:
detecting, by the second device, a first operation performed on the first control, and generating a first instruction; and
sending, by the second device, first indication information to the first device in response to the first instruction, wherein the first indication information indicates the first device to enable or disable the intelligent channel access function.

13. The method according to claim 12, wherein the first operation is tapping the first control to set the first control to an "enabled enabled" state; and
the sending, by the second device, first indication information to the first device in response to the first instruction comprises:
sending, by the second device, the first indication information to the first device in response to the first instruction, wherein the first indication information indicates to enable the intelligent channel access function.

14. The method according to claim 12, wherein the first operation is tapping the first control to set the first control to a "disabled disabled" state; and
the sending, by the second device, first indication information to the first device in response to the first instruction comprises:
sending, by the second device, the first indication information to the first device in response to the first instruction, wherein the first indication information indicates to disable the intelligent channel access function.

15. The method according to claim 12, wherein the first operation is tapping the first control to set the first control to a checked state; and
the sending, by the second device, first indication information to the first device in response to the first instruction comprises:
sending, by the second device, the first indication information to the first device in response to the first instruction, wherein the first indication information indicates to enable the intelligent channel access function.

16. The method according to claim 12, wherein the display screen is a trigger screen, and the first operation is tapping the first control to set the first control to an on state; and
the sending, by the second device, first indication information to the first device in response to the first instruction comprises:
sending, by the second device, the first indication information to the first device in response to the first instruction, wherein the first indication information indicates to enable the intelligent channel access function.

17. A communication apparatus, wherein the apparatus comprises:
a transceiver unit, configured to receive first indication information from a second device, wherein the first indication information indicates the apparatus to enable or disable an intelligent channel access function, and the intelligent channel access function is a function of accessing a channel based on a channel access decision output by a neural network; and
a processing unit, configured to enable or disable the intelligent channel access function based on the first indication information.

18. The apparatus according to claim 17, wherein if the first indication information indicates to enable the intelligent channel access function, the apparatus further comprises:
disable a carrier sense multiple access with collision avoidance CSMA/CA channel access function of the apparatus, or keep enabling a CSMA/CA channel access function of the apparatus, wherein the CSMA/CA channel access function is a function of accessing a channel based on a CSMA/CA mechanism.

19. The apparatus according to claim 17, wherein if the first indication information indicates to disable the intelligent channel access function, the apparatus further comprises:
enable a carrier sense multiple access with collision avoidance CSMA/CA channel access function of the apparatus, wherein the CSMA/CA channel access function is a function of accessing a channel based on a CSMA/CA mechanism.

20. The apparatus according to any one of claims 17 to 19, wherein the apparatus further comprises:
if the first indication information indicates the apparatus to enable the intelligent channel access function, the transceiver unit is further configured to send second indication information to a third device, wherein the second indication information indicates the third device to enable the intelligent channel access function; or
if the first indication information indicates the apparatus to disable the intelligent channel access function, the transceiver unit is further configured to send third indication information to a third device, wherein the third indication information indicates the third device to disable the intelligent channel access function.

21. The apparatus according to claim 17, 18, or 20, wherein if the apparatus is further configured to enable the intelligent channel access function, and keep enabling the carrier sense multiple access with collision avoidance CSMA/CA channel access function of the apparatus, wherein the CSMA/CA channel access function is the function of accessing a channel based on the CSMA/CA mechanism, the method further comprises:
the apparatus determines a first channel access manner based on a network status parameter, wherein the first channel access manner is an intelligent channel access manner or a carrier sense multiple access with collision avoidance CSMA/CA channel access manner, the intelligent channel access manner is a channel access manner provided by the intelligent channel access function, the CSMA/CA channel access manner is a channel access manner provided by the CSMA/CA channel access function of the apparatus, and the CSMA/CA channel access function is the function of accessing a channel based on the CSMA/CA mechanism; and
the apparatus sends data on a channel in the first channel access manner.

22. The apparatus according to claim 21, wherein the intelligent channel access manner is a manner of accessing a channel based on a channel access decision obtained by the neural network based on an environment status parameter.

23. The apparatus according to claim 22, wherein the environment status parameter comprises at least one of the following: a received signal strength indicator RSSI obtained by the apparatus, an energy detection value obtained by performing signal energy detection by the apparatus, and a carrier sense value obtained by performing carrier sense by the apparatus.

24. The apparatus according to any one of claims 21 to 23, wherein that the apparatus determines a first channel access manner based on a network status parameter comprises:
the apparatus determines a quantity M of times that an energy detection value is greater than a first threshold in a plurality of times of signal energy detection performed in first preset duration and a quantity N of times that a carrier sense value is greater than a second threshold in a plurality of times of carrier sense performed by the apparatus in the first preset duration, wherein both M and N are integers greater than or equal to 1; and
if a ratio of M to N is greater than or equal to a third threshold, the apparatus determines that the first channel access manner is the CSMA/CA channel access manner; or
if a ratio of M to N is less than a third threshold, the apparatus determines that the first channel access manner is the intelligent channel access manner.

25. The apparatus according to any one of claims 21 to 23, wherein that the apparatus determines a first channel access manner based on network status information comprises:
if there is a hidden terminal in a basic service set BSS in which the apparatus is located, the apparatus determines that the first channel access manner is the intelligent channel access manner; or
if there is no hidden terminal in a BSS in which the apparatus is located, the apparatus determines that the first channel access manner is the CSMA/CA channel access manner.

26. The apparatus according to any one of claims 21 to 23, wherein that the apparatus determines a first channel access manner based on network status information comprises:
the apparatus determines total duration that is in second preset duration and in which a data packet is transmitted on the channel; and
if the total duration is greater than or equal to a fourth threshold, the apparatus determines that the first channel access manner is the intelligent channel access manner; or
if the total duration is less than a fourth threshold, the apparatus determines that the first channel access manner is the CSMA/CA channel access manner.

27. The apparatus according to any one of claims 21 to 26, wherein the first channel access manner is the intelligent channel access manner, and that the apparatus sends data on a channel in the first channel access manner comprises:
the apparatus maps the data to an intelligent channel access queue, wherein the intelligent channel access queue carries data that accesses a channel in the intelligent channel access manner; and
the apparatus sends the data on the channel by using a queue parameter that is of the intelligent channel access queue and that is output by the neural network.

28. A communication apparatus, wherein the apparatus comprises a display screen, the display screen is configured to display a user interface, the user interface comprises a first control, the first control is used to enable an intelligent channel access function or disable the intelligent channel access function, the intelligent channel access function is a function of accessing a channel based on a channel access decision output by a neural network, and the method comprises:
the apparatus detects a first operation performed on the first control, and generates a first instruction; and
the apparatus sends first indication information to the first device in response to the first instruction, wherein the first indication information indicates the first device to enable or disable the intelligent channel access function.

29. The apparatus according to claim 28, wherein the first operation is tapping the first control to set the first control to an "enabled enabled" state; and
that the apparatus sends first indication information to the first device in response to the first instruction comprises:
the apparatus sends the first indication information to the first device in response to the first instruction, wherein the first indication information indicates to enable the intelligent channel access function.

30. The apparatus according to claim 28, wherein the first operation is tapping the first control to set the first control to a "disabled disabled" state; and
that the apparatus sends first indication information to the first device in response to the first instruction comprises:
the apparatus sends the first indication information to the first device in response to the first instruction, wherein the first indication information indicates to disable the intelligent channel access function.

31. The apparatus according to claim 28, wherein the first operation is tapping the first control to set the first control to a checked state; and
that the apparatus sends first indication information to the first device in response to the first instruction comprises:
the apparatus sends the first indication information to the first device in response to the first instruction, wherein the first indication information indicates to enable the intelligent channel access function.

32. The apparatus according to claim 28, wherein the display screen is a trigger screen, and the first operation is tapping the first control to set the first control to an on state; and
that the apparatus sends first indication information to the first device in response to the first instruction comprises:
the apparatus sends the first indication information to the first device in response to the first instruction, wherein the first indication information indicates to enable the intelligent channel access function.

33. A communication apparatus, wherein the communication apparatus comprises a transceiver unit configured to perform a receiving/sending operation in the method according to any one of claims 1 to 11 and a processing unit configured to perform a processing operation in the method according to any one of claims 12 to 16.

34. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 to 11, or to enable the communication apparatus to perform the method according to any one of claims 12 to 16.

35. A communication apparatus, wherein the communication apparatus comprises a processor, and the processor is configured to execute a computer program or computer instructions in the memory, to perform the method according to any one of claims 1 to 11, or to perform the method according to any one of claims 12 to 16.

36. A communication apparatus, wherein the communication apparatus comprises a processor, and the processor is configured to perform the method according to any one of claims 1 to 11, or the processor is configured to perform the method according to any one of claims 12 to 16.

37. A computer-readable storage medium, wherein the computer-readable storage medium stores a computer program, and when the computer program is executed by a communication apparatus, the communication apparatus is enabled to perform the method according to any one of claims 1 to 11, or the communication apparatus is enabled to perform the method according to any one of claims 12 to 16.

38. A computer program product, wherein when the computer program product is run, the method according to any one of claims 1 to 11 is performed, or the method according to any one of claims 12 to 16 is performed.
